(19) Europäisches Patentamt

European Patent Office

Office européen des brevets

(11) **EP 4 708 150 A1**

(12) **EUROPEAN PATENT APPLICATION**

(43) Date of publication:
**11.03.2026 Bulletin 2026/11**

(21) Application number: **25195380.8**

(22) Date of filing: **12.08.2025**

(51) International Patent Classification (IPC):
**G06N 3/0985** (2023.01)   **G06N 3/045** (2023.01)
**G06N 3/0475** (2023.01)

(52) Cooperative Patent Classification (CPC):
**G06N 3/0475; G06N 3/045; G06N 3/0985**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.08.2024 US 202463682784 P**
**27.11.2024 US 202418963466**

(71) Applicant: **Microsoft Technology Licensing, LLC**
**Redmond, WA 98052-6399 (US)**

(72) Inventors:
• **Hernández, Javier González**
**Redmond, 98052-6399 (US)**
• **Nori, Aditya Vithal**
**Redmond, 98052-6399 (US)**

(74) Representative: **Page White Farrer**
**Bedford House**
**21a John Street**
**London WC1N 2BF (GB)**

(54) **EVALUATING COMPUTATIONAL REASONING PERFORMANCE OF GENERATIVE ARTIFICIAL INTELLIGENCE MODELS**

(57)     Systems and methods evaluate computational reasoning performance of generative artificial intelligence (GAI) models. Both a factual prompt and a counterfactual prompt are submitted to both first and second GAI models, thereby generating first factual and counterfactual outputs for the first GAI model and second factual and counterfactual outputs for the second GAI model. Probability of necessity (PN) and probability of sufficiency (PS) values are computed for both the first and second GAI models based on their associated factual output and counterfactual output. The computational reasoning performance of the first GAI model relative to the second GAI model are compared based on the PN and PS values. One of the first or the second GAI models is selected based on the comparison and submitted a target prompt using the selected one of the first and second GAI model.

FIG. 1

EP 4 708 150 A1

**Description**

BACKGROUND

Generative artificial intelligence models, such as large language models, have revolutionized the way people interact with technology, enabling more natural and intuitive communication between humans and computers in applications like writing assistants, sentiment analysis in social media, healthcare, and many others. With the surge of interest and recent breakthroughs, the ability of such models to reason about real-world problems continues to be a topic of intense research.

SUMMARY

The disclosed examples are described in detail below with reference to the accompanying drawing figures listed below. The following summary is provided to illustrate some examples disclosed herein. The following is not meant, however, to limit all examples to any particular configuration or sequence of operations.

Aspects of the disclosure provide improved results in technical applications, such as in cybersecurity (e.g., where a selected/modified model is used in a security system to reason about the cause of a detected anomaly, whether it is indicative of malicious or benign behavior), in performing machine diagnostics (e.g., diagnosing faults and other issues in production or manufacturing machinery, vehicles, aircraft, computer systems, or the like), and in improvements in image processing (e.g., more accurate image classification, image segmentation, object detection, bounding box detection, and so forth).

Example solutions for evaluating computational reasoning performance of generative artificial intelligence (GAI) models include: submitting both a factual prompt and a counterfactual prompt to both a first GAI model and a second GAI model, thereby generating a first factual output and a first counterfactual output from the first GAI model and a second factual output and a second counterfactual output from the second GAI model; computing a first probability of necessity (PN) value and a first probability of sufficiency (PS) value for the first GAI model using the first factual output and the first counterfactual output; computing a second PN value and a second PS value for the second GAI model based on the second factual output and the second counterfactual output; comparing the computational reasoning performance of the first GAI model relative to the computational reasoning performance of the second GAI model based on the first and second PN values and the first and second PS values; selecting one of the first GAI model or the second GAI model based on the comparison; and submitting a target prompt to the selected one of the first GAI model and the second GAI model.

BRIEF DESCRIPTION OF THE DRAWINGS

The disclosed examples are described in detail below with reference to the accompanying drawing figures listed below:

FIG. 1 illustrates direct versus counterfactual reasoning abilities of GPT-2, GPT-3.5-turbo, and GPT-4 for a simple arithmetic problem;

FIG. 2 is an example architectural diagram illustrating data flow within an example model analytics system;

FIG. 3A-3C illustrate an example reasoning test for assessing reasoning ability of a large language model (LLM);

FIG. 3D illustrates a HEX diagram depicting two approaches for solving an example problem;

FIG. 4 illustrates contingency tables for Example 1, as well as reasoning graphs for other example math problems described herein ("EvenSum" and "CandyParty");

FIG. 5 shows heatmaps comparing the consistency of data generated by GPT-2, GPT-3.5-turbo, and GPT-4 for the Div6 problem;

FIG. 6 illustrates the estimated PN and PS for each problem, obtained through bootstrap resampling;

FIG. 7A to FIG. 7C illustrate reconstruction of the $\gamma$-PN-overlap and $\gamma$-PS-overlap curves for GPT-2, GPT-3.5-turbo, and GPT-4 for the three example problems;

FIG. 8 is an example reasoning graph for the ConPref problem;

FIG. 9 is an example graph illustrating true PN and PS versus inferred PN and PS using GPT-2, GPT-3.5-turbo, and GPT-4 for the ConPref problem;

FIG. 10 includes three graphs that illustrate the reconstruction of the $\gamma$-PN-overlap and $\gamma$-PS-overlap curves for GPT-2, GPT-3.5-turbo, and GPT-4 for the ConPref problem, as well as a visualization of FIR and CIR;

FIG. 11 is a HEX diagram for an example counterfactual query in the Div6 problem;

FIG. 12A to 12C illustrate element and aggregated CIR and FIR for the SumEven, CandyParty, and ConPref problems;

FIG. 13 is a flowchart of an example process for evaluating reasoning capabilities of generative artificial intelligence models; and

FIG. 14 is a block diagram of an example computing device (e.g., a computer storage device) for implementing aspects disclosed herein, and is designated generally as computing device.

Corresponding reference characters indicate corresponding parts throughout the drawings. Any of the figures may be combined into a single example or embodiment.

DETAILED DESCRIPTION

Generative artificial intelligence (GAI) models that exhibit greater performance in computational reasoning provide improved results in technical applications, such as in cybersecurity (e.g., where a selected/modified GAI model is used in a security system to reason about the cause of a detected anomaly, whether it is indicative of malicious or benign behavior), in performing machine diagnostics (e.g., diagnosing faults and other issues in production or manufacturing machinery, vehicles, aircraft, computer systems, or the like), and in improvements in image processing (e.g., more accurate image classification, image segmentation, object detection, bounding box detection, and so forth).

In computational terms, computational reasoning refers to the algorithmic process of deriving conclusions, making judgments, or generating inferences based on a structured set of input data or premises. This process is central to the design and functionality of artificial intelligence systems and is analyzed through various technical frameworks. Symbolic reasoning, for instance, involves the formal manipulation of abstract symbols to represent and solve problems in domains such as logic, mathematics, and knowledge representation. Causal reasoning employs models to map cause-effect relationships, enabling systems to predict and analyze how specific inputs propagate through a system to produce outcomes. Additional reasoning paradigms include inductive reasoning, which employs statistical or pattern-based algorithms to generalize from specific datasets; deductive reasoning, where inference engines apply predefined rules or axioms to evaluate specific cases; and abductive reasoning, which utilizes heuristic methods to hypothesize plausible explanations in scenarios characterized by incomplete or uncertain data.

In the realm of GAI models such as large language models (LLMs), computational reasoning is typically understood to be the ability of these models to demonstrate emergent capabilities that surpass mere statistical pattern recognition in the training set. It entails systematically breaking down problems into a logical sequence of smaller, manageable steps and then processing these steps internally to arrive at accurate conclusions that are grounded in reality. This concept is the foundation for techniques such as chain of thoughts prompting, which aim to teach GAI models how to reason by providing examples where problems are solved through a sequence of smaller steps.

Assessing the computational reasoning abilities of GAI models involves distinguishing between two aspects: the accuracy with which a GAI model solves a problem, and its capacity to analyze, interpret, and process the fundamental elements that lead to a solution. While GAI models are remarkable in using observed patterns from their training data to generate correct answers (e.g., correlations), they sometimes falter when faced with hypothetical/imaginary scenarios that were not part of their training data (e.g., counterfactuals). For example, both GPT-3.5-turbo and GPT-4 can accurately determine the divisibility of numbers by 6, suggesting at first glance that they can reason about divisibility. However, when the questions are framed in a counterfactual manner, only GPT-4 maintains a low error rate, indicating its superior ability to handle such reasoning tasks.

Improved techniques for evaluating the computational reasoning capability of GAI models (e.g., LLMs) are described herein. One practical use of these techniques is model selection. In such applications and examples, the reasoning capabilities of multiple candidate GAI models are evaluated and compared using the methodology described herein. Based on that comparison, a GAI model is selected from the candidate GAI models (e.g., the GAI model determined to have the best reasoning capabilities). For example, a GAI model is selected from

available candidates for deployment in a particular context and, once selected and deployed, is used to resolve target queries.

A specific example use case is GAI model testing, validation, and benchmarking. In this example, results of the computational reasoning performance analysis performed on a GAI model are used to modify the GAI model to improve its performance. For example, based on the analysis, the GAI model is retrained (e.g., using a modified training set, a modified hyperparameter, or the like, resulting in different weights for the GAI model), rearchitected (e.g., by changing some property or properties of the GAI model itself, as opposed to merely changing its weights, such as the number of layers, number of nodes, connectivity of the nodes, an activation function implemented within the GAI model, and so forth), fine-tuned (e.g., with the addition of one or more layers that are subject to further training), augmented with additional functionality (e.g., prompt filtering or modification, output verification, filtering, and so forth), or otherwise modified so as to improve its reasoning capabilities. Such use cases can broadly be characterized as a subset of GAI model selection (e.g., based on a comparison of the reasoning capabilities of a modified GAI model with the original GAI model and/or different modified GAI models).

A GAI model that has been selected in the above manner can be used in various technical applications, with particular technical benefits in such technical applications that have an inherent significance for robust reasoning capabilities (as opposed to mere statistical pattern recognition).

One example application is cybersecurity. In GAI model-supported cybersecurity, it is particularly important that a GAI model's computational reasoning capabilities can be robustly verified. For example, in one application, a selected/modified GAI model is used in a security system to reason about the cause of a detected anomaly, or whether it is indicative of malicious or benign behavior. In such applications, a decision or conclusion made by the selected GAI model triggers a security action autonomously. In other such applications, a conclusion or decision made by the selected GAI model causes a suggested or recommended action to be outputted (e.g., via a user interface, such as a graphical user interface), which is performed in response to user input confirming the action. Examples of security actions include isolating, quarantining, or restricting an entity (e.g., device, user account, file, document, application, process, service, or the like) within a network or other system.

Other example applications include the use of a selected GAI model to perform machine diagnostics, such as diagnosing faults and other issues in production or manufacturing machinery, vehicles, aircraft, computer systems (e.g., computers, user devices, servers, data centers), and the like.

Another example application is computer vision, such as image processing or processing of 'visual' spatial sensor data more generally (e.g., lidar, radar, and so forth). Conventional computer vision is based on statistical pattern recognition. For example, previous advances in computer vision have been driven by learned features in convolutional neural network architectures. However, improvements in image processing (e.g., more accurate image classification, image segmentation, object detection, bounding box detection, and so forth) can be achieved with a GAI model that is capable of reasoning about the visual contents of an image captured in its pixel values. Specific examples include medical imaging and diagnostics based on physiological sensor measurements, where improved GAI model reasoning ability translates to improved diagnostics.

Another example application is signal processing, such as processing of audio data or other forms of sensor data. The same principles as described in the previous paragraphs apply equally to the processing of other types of functional data, such as audio data, motion sensor data, physical measurements collected in a technical system (e.g., manufacturing system, vehicle, aircraft, or other machines), physiological measurements collected from a human or other living being (e.g., to support a diagnostics application).

Another example application is data generation. In such applications, an instruction to generate a certain type of data (e.g., synthetic image data, audio data, other sensory data) is inputted to a GAI model selected on the basis of its verified computational reasoning capabilities (e.g., a natural language prompt describing an image to be generated). Improved data generation performance is achieved by a GAI model that has better computational reasoning about the instruction given to it.

While some examples are described in relation to use of GAI models (e.g., Transformer-based models), it should be understood that the systems and methods described herein can be similarly applied to other types of GAI models, such as neuro-symbolic models, reinforcement learning models, self-supervised models, causal models, graph neural networks (GNNs), multi-modal models, and the like.

The various examples are described in detail with reference to the accompanying drawings. Wherever preferable, the same reference number is used throughout the drawings to refer to the same or like parts. References made throughout this disclosure relating to specific examples and implementations are provided solely for illustrative purposes but, unless indicated to the contrary, are not meant to limit all examples. Additional technical details, examples, and technical benefits are described below with regard to the figures.

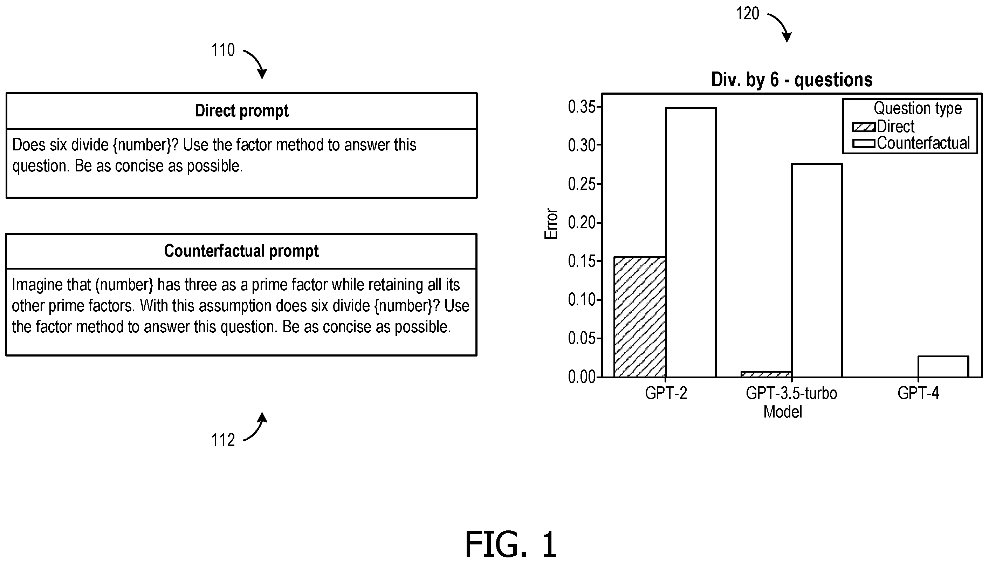

FIG. 1 includes a graph 120 that illustrates actual versus perceived computational reasoning performance of GPT-2, GPT-3.5-turbo, and GPT-4 for a simple arithmetic problem. In this example, two distinct types of questions (e.g., direct and counterfactual) are posed to the models, each repeated ten times, and for every {number} from 1 to 50. More specifically, both a direct prompt 110 and a counterfactual prompt 112 are separately provided to three example GAI models. All three models showed an inflated sense of computational reasoning performance when answering the direct questions. The discrepancy is especially pronounced in GPT-3.5-turbo, which performed nearly flawlessly on direct questions, but experienced a surge in error rate, exceeding 25%, when handling counterfactual questions. Error, in graph 120, is depicted as a normalized value between 0.0 and 1.0.

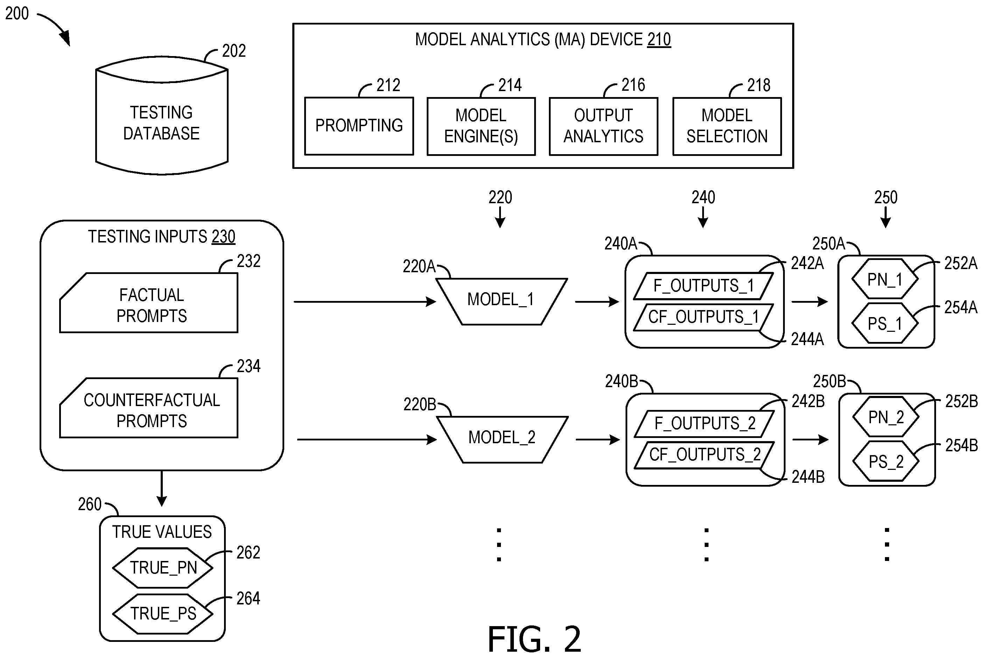

FIG. 2 is an example architectural diagram illustrating data flow within an example model analytics (MA) system 200. In examples described herein, the model analytics system 200 and methods are provided to assess the reasoning performance of GAI models (e.g., LLMs) by examining the concepts necessity and sufficiency, which are key elements of logical reasoning and have been studied in multiple fields, logic, probability, and causality.

More specifically, in the example, a model analytics (MA) device 210 applies testing inputs 230 (e.g., a set of factual prompts 232 and related counterfactual prompts 234) to each particular model 220 being tested (e.g., model 220A, model 220B, and so forth). Such application of the testing inputs 230 to a given model 220 (e.g., model 220A) causes the associated model 220A to generate a respective set of outputs 240A, namely outputs for the factual prompts 232 (shown here as "F_OUTPUTS_1" 242A) and outputs for the counterfactual prompts 234 (shown here as "CF_OUTPUTS_1" 244A). The MA device 210 uses these outputs 240A to generate analytic values 250A for probability of necessity (PN) (shown here as "PN_1" 252A) and probability of sufficiency (PS) (shown here as "PS_1" 254A) for each particular model 220A. The MA device 210 uses these values 250 to evaluate computational reasoning performance of the associated model 220, and may also use these values 250 to compare the relative performance of the models 220.

In the example, the MA device 210 provides prompting 212 that facilitates preparing the testing inputs 230 and submitting those testing inputs 230 to the model(s) 220. The testing inputs 230 include true values 260, namely "TRUE_PN" 262 and "TRUE_PS" 264, that represent baseline, reference, or ground truth values for the testing inputs 230 (e.g., values used as "ideal" for purposes of comparison, perhaps considered the "truth"). The MA device 210, in some examples, also provides model engine(s) 214 (e.g., one or more of the models 220 themselves, and their associated data structures, processing, and so forth). The MA device 210 provides output analytics 216 that are configured to analyze the outputs 240 generated by the models 220 (e.g., generating the analytic values 250 for each set of outputs 240). Model selection 218 uses those values 250 to evaluate the models 220 (e.g., selecting model(s) 220 for evaluation of future prompts, perhaps where computational reasoning performance is particularly significant, such as in counterfactual prompts). A testing database 202 is provided for storing testing inputs 230, outputs 240, and/or analytics values 250 generated by the MA system 200.

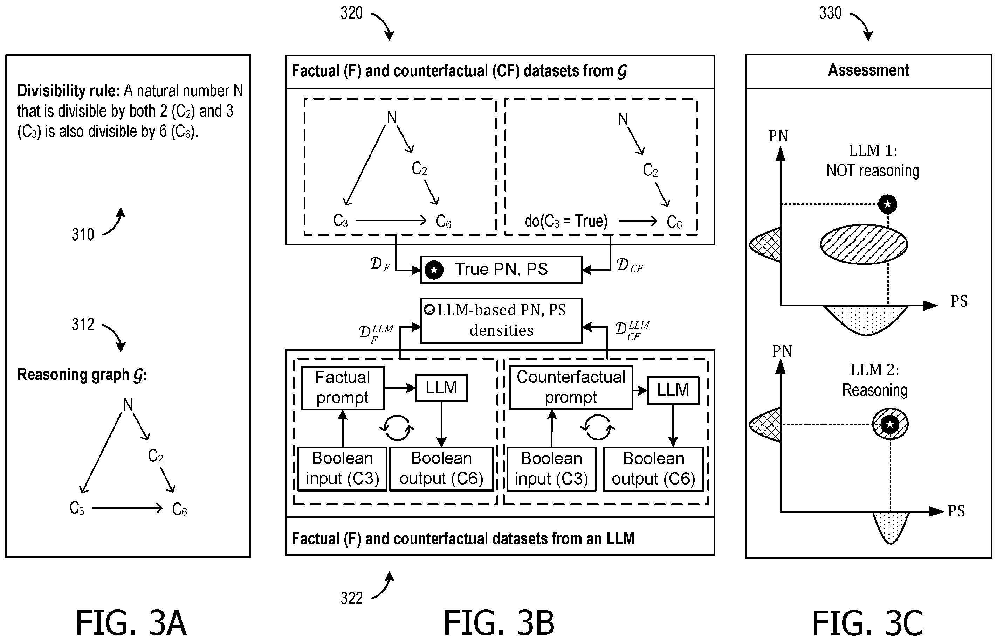

The operations of the MA system 200 and its component processes, as well as experimental results, are described in greater detail below with respect to FIG. 3A to FIG. 14.

In propositional logic, a sufficient condition is defined as $X \Rightarrow Y$, indicating that the presence of $X$ ensures the occurrence of $Y$. On the other hand, a necessary condition is defined as $Y \Rightarrow X$, signifying that the occurrence of $Y$ necessitates the prior occurrence of $X$. Here, the analytics system focuses on the probabilistic interpretations of necessity and sufficiency. More specifically, the probability of necessity (PN) between two Boolean variables $X$ and $Y$ is defined as $PN(x, y) := P(y'_{x'} \mid x, y)$. Here, $y'_{x'}$ represents the counterfactual value of $Y = y'$, had $X$ been set to a different value $x'$. By conditioning on both $X = x$ and $Y = y$, this measure captures probability of observing a different outcome in the absence of the event $X = x$. The probability of sufficiency (PS), on the other hand, is defined as $PS(x, y) := P(y_x \mid x', y')$ and measures the probability that $X = x$ results in $Y = y$, for cases where both originally had different values.

In practice, the operations described herein may be applied to various fields, such as medical imaging (e.g., evaluating the quality of a medical scan such as an X-ray), mathematics, code generation, vision, and more.

FIGs. 3A-3C illustrate an example reasoning test for assessing computational reasoning performance of a GAI model such as the models 220 shown in FIG. 2. FIG. 3A shows an example divisibility rule 310 and a corresponding reasoning graph 312. FIG. 3B illustrates an example dataset generation for computing true values 320 (e.g., TRUE_PN 262 and TRUE_PS 264 of true values 260 from FIG. 2) of the dataset (e.g., factual prompts 232 and counterfactual prompts 234) and measured values 322 (e.g., analytics values 250A, 250B) from two example LLMs (e.g., models 220A, 220B). FIG. 3C shows a graph comparison 330 illustrating analytics comparing actual values of PN and PS (e.g., PN_1 252A and PS_1 254A) with PN and PS estimates (e.g., analytics values 250A, 250B) for the model-generated data (e.g., outputs 240A, 240B) for the models 220A, 220B.

FIGs. 3A-3C are illustrated with respect to LLM models for convenience of discussion. However, the discussion of FIGs. 3A-3C is applicable to other GAI models.

When a problem can be solved via a reasoning graph of boolean conditions, denoted by $G$, the PN and PS can be computed by the analytics system using a causal model underlying $G$. The exact computation of PN and PS uses samples from the (causal) data generative model, counterfactual data (experiments) as well as other monotonicity assumptions. As a reasoning test, the MA system 200 statistically compares the true PN and PS measures (e.g., TRUE_PN 262, TRUE_PS 264, computed by sampling from the original and the intervened graph) with those simulated via factual and counterfactual datasets generated by an LLM (e.g., analytics values 250). FIG. 3A-3C presents an informal illustration of the reasoning test implemented by the MA system 200, focusing on the specific example problem of determining whether a number $N$ is divisible by 6. The example test leverages the reasoning principle that: "A natural number $N$ that is divisible by both 2 and 3 is also divisible by 6". This logic is represented, in the top of FIG. 3B, in the reasoning graph $G$ that links the conditions $C_2$ (divisibility by 2) and $C_3$ (divisibility by 3) to the conclusion $C_6$ (divisibility by 6). In examples, the MA system 200 tests the computational reasoning performance of an LLM (e.g., model 220) using natural numbers $N$ from 1 to 400.

As shown in FIG. 3B, two sets of data are created based on $G$. The first is a factual dataset ($D_F$) (e.g., factual prompts 232) which captures whether each number $N$ satisfies conditions $C_2$ and $C_3$. The second is a counterfactual dataset ($D_{CF}$) (e.g., counterfactual prompts 234), which assumes condition $C_3$ is always true and then records whether each number X would satisfy $C_6$ under this assumption/intervention (e.g., realized by $do(C_3 = True)$ in FIG. 3B). For the model 220 being evaluated, two datasets are also produced. The first, $D_F^{LLM}$, documents the model response for $C_6$ for each number $N$, when the prompt is based on the reasoning graph $G$ (e.g., as F_OUTPUTS_1 242A). The second, $D_{CF}^{LLM}$, involves a hypothetical scenario where it is assumed that $C_3$ is true and then record the LLM output for $C_6$ given this "counterfactual prompt" (e.g., as CF_OUTPUTS_1 244A). The MA system 200 evaluates the reasoning performance of the model 220 by comparing the estimated PN and PS from the $D_F^{LLM}$ and $D_{CF}^{LLM}$ datasets (e.g., analytics values 250A) with the actual values derived from $D_F$ and $D_{CF}$ datasets (true values 260, shown as the "star" point within each graph). FIG. 3C displays these comparisons, plotting PN vs. PS. The closer the estimated PN/PS values to the actual PN/PS values, the better the model 220 performs at reasoning. In this example, "LLM 2" demonstrates better reasoning performance than "LLM 1".

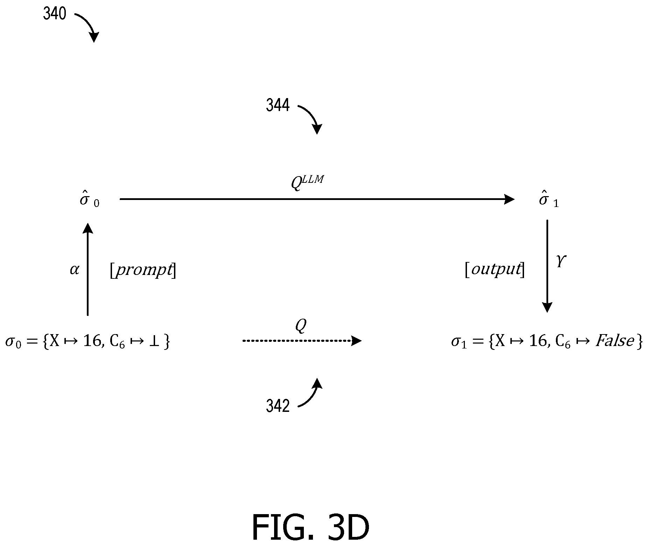

FIG. 3D illustrates a HEX diagram 340 depicting two approaches for solving a problem $(Q, \sigma_0)$ for an example problem: "Given that a natural number divisible by both 2 and 3 is also divisible by 6, determine whether the number 10 is divisible by 6" (referred to herein as "Example 1"). The dotted path 342 in FIG. 3D corresponds to the actual process of solving the problem, while the solid path 344 represents the process performed via the GAI model (e.g., models 220). In the example, the GAI model functions as an abstract machine that uses natural language as an interface. Here, the core elements of this HEX framework are introduced, which enables the MA system 200 to define a model-internal representation of PN and PS.

More specifically, in this example, a problem is defined as a query-state pair $(Q, \sigma)$. The state $\sigma$ is a mapping defined by $\sigma : \mathcal{V} \to \mathcal{C}$, which assigns values from a specified domain C to a set of variables V = $\{V_1,..., V_n\}$. The query $Q : 2^{\mathcal{V} \to \mathcal{C}} \to 2^{\mathcal{V} \to \mathcal{C}}$ is a mapping that transforms an input state $\sigma$ to a well-defined output state. To solve a problem is to calculate $\sigma_1 = Q(\sigma_0)$, where $\sigma_0$ and $\sigma_1$ represent the states before and after the query Q is applied.

To solve this example, the query Q is applied to the state $\sigma_0 = \{N \to 10, C_6 \to \bot\}$, where $Q = \lambda\sigma \cdot (\sigma(N)(\bmod 2) \equiv 0) \wedge (\sigma(N)(\bmod 3) \equiv 0)$. This results in a final state $\sigma_1 = \{N \to 10, C_6 \to False\}$, thereby resolving the problem with $\sigma_1(C_6) = Q(\sigma_0)$ = False.

Further, consider the question of how the GAI model solves a problem defined by a query-state pair $(Q, \hat{\sigma}_0)$. This process involves three steps, as illustrated in FIG. 3D. First, an abstraction mapping translates the initial state $\hat{\sigma}_0$ into a latent state $\hat{\sigma}_0$ via a *prompt.* Next, the GAI model processes (e.g., via the query $Q^{LLM}$) this latent state $\hat{\sigma}_0$. Finally, the output mapping transforms the GAI model output latent state $\hat{\sigma}_1$ back into a concrete state, producing the final output $\sigma_1$.

Formally, solving the problem $(Q, \sigma_0)$ with a GAI model can be described as a sequence of function applications resulting in the output $\sigma_1 = (\gamma \circ Q^{LLM} \circ \alpha)(\sigma_0)$. To illustrate this, in an example, the problem statement is given as a prompt input to GPT-4. The example response from GPT-4 is "False", which matches the result obtained by applying the query Q directly to the input state $\sigma_0$. When both the direct application of $Q$ and the GAI model computation yield the same answer, it is said that the diagram, as shown in FIG. 3D, is commutative (e.g., meaning that following either the dotted line or the solid lines lead to the same result).

In examples, to assess the computational reasoning performance of the models 220, the MA system 200 links its generated responses to the actual reasoning processes that produced those responses. For a problem $(Q, \sigma)$, it is postulated that the existence of a causal model $\mathcal{M}_{\mathcal{V}}$ defined over variables in $\mathcal{V}$, and by a set of structural equations and endogenous variables. Here, of particular interest is the causal models that represent the logical steps involved in problem-solving. However, it is important to note that the concept of a causal model is broadly applicable beyond this specific application. It is assumed that V = $\{X, Y, Z\}$, which includes X and $Y$ as Boolean variables, and $Z$ as a variable (which may be multivariate) that encompasses all necessary factors that are required to analyze or interpret how an intervention on X would affect $Y$. In the context of causality, this means that the distribution $\mathbb{P}(Y \mid do(X = x'))$, where $do$ denotes the intervention operator is identifiable. This means the outcome for $Y$ can be generated or produced, and that the counterfactual $Y_{X=x'}$, that can be read as "the value of $Y$ had X been $x'$", is well-defined. For ease of exposition in the following description, the notation is simplified by omitting the explicit reference to $Z$. Therefore, $Y_{X=x}(Z = z)$ is denoted more succinctly as $Y_{X=x}$.

If *Y* is monotonic with respect to X, then PN and PS are computed as follows:

$$PN(x,y) = \frac{\mathbb{P}(y) - \mathbb{P}(y \,|do(x'))}{\mathbb{P}(x,y)} \ and \ PS(x,y) = \frac{\mathbb{P}(y|do(x)) - \mathbb{P}(y)}{\mathbb{P}(x',y')} \quad (1)$$

To estimate PN and PS (e.g., to compute PN_1 252A and PS_1 254A), two different types of datasets are used. The first is a *factual* dataset $D_F = \{x_i, y_i, z_i\}_{i=1}^n$, which is used to infer $\mathbb{P}(y)$, $\mathbb{P}(x,y)$, and $\mathbb{P}(x',y')$ (e.g., factual prompts 232). The second dataset $D_{CF} = \{x_i, Y_{X=x_i}, z_i\}_{i=1}^n$ is a *counterfactual* dataset, and is used to determine $\mathbb{P}(y|do(x))$ and $\mathbb{P}(y \,|do(x'))$ (e.g., counterfactual prompts 234).

There are various methods to generate the datasets $D_F$ (factual) and $D_{CF}$ (counterfactual). For a physical process, one example is through observation and experimentation. However, in these examples, access is presumed to a comprehensive reasoning graph that is equivalent to a causal model $\mathcal{M_V}$. This allows the MA system 200 to simulate and generate the $D_F$ and $D_{CF}$ datasets. Both $\mathcal{M_V}$ and the sub-model $\mathcal{M}_{V,do(X=x)}$ define two distinct joint probability distributions $\mathbb{P}_{M_V}$ and $\mathbb{P}_{M_V,do(X=x)}$ over *X, Y,* and *Z*. The datasets $D_F$ and $D_{CF}$ are thus obtained by sampling from these respective probability distributions. These datasets are then used to calculate PS and PN using equation (1).

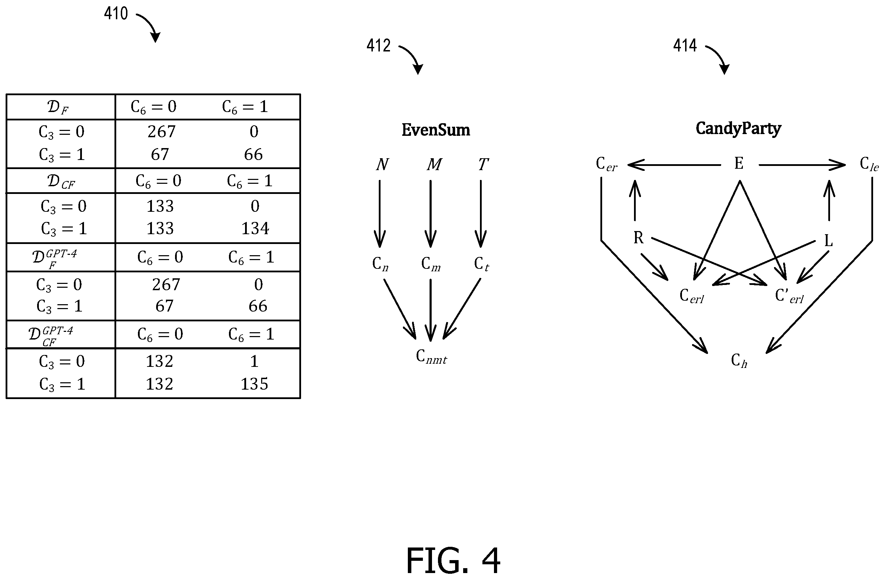

FIG. 4 illustrates contingency tables 410 for $D_p$, $D_{CF}$, $D_F^{GPT-4}$, and $D_{CF}^{GPT-4}$ in this example, as well as reasoning graphs 412, 414 for other example math problems described herein ("EvenSum" and "CandyParty"). In these examples, C-type nodes in the graphs 412, 414 represent Boolean conditions. In this example, the MA system 200 obtained consistent answers for a direct divisibility question (e.g., the corresponding HEX diagram commutes). However, to evaluate the reasoning performance of the model 220, this consistency should also be observed when the queries are framed in a counterfactual manner. This helps ensure that the model 220 can apply its computational reasoning to imaginary situations that are unlikely to be present in the training set (e.g., testing inputs 230), demonstrating the ability of the model 220 to generalize based on a correct internal representation of the reasoning logic of the problem. Practically, this means employing the model 220 as a "counterfactual data simulator", where the data generated by the model 220 under these hypothetical conditions is used to estimate PN and PS.

*Definition 1 (Counterfactual query). Consider a problem (Q, $\sigma_0$), with $\sigma_0$ = {X ↦ x, Y ↦ y, Z ↦ z} being an initial state. Let $\mathcal{M_V}$ be a causal model over the variables $\mathcal{V}$. A counterfactual query Q' is then defined as: Q'($\sigma_0$) = {X ↦ x, Y ↦ $Y_{X=x'}$, Z ↦ z}.*

In other words, a counterfactual query updates two variables of the state: it sets X to its new value *x'*, and Y to the counterfactual $Y_{X=x'}$. An example LLM-based counterfactual $Y_{X=x'}^{LLM}$ is computed as follows:

$$Y_{X=x'}^{LLM} = \left(\gamma \circ Q'^{LLM} \circ \alpha\right)(\sigma_0)(Y)$$

where $\sigma_0$ = {X ↦ x, Y ↦ y, Z ↦ z}, and $Q'^{LLM}$ is a counterfactual query. This entire process simulates counterfactual reasoning within the LLM, and is facilitated through textual prompts that are structured to elicit the desired counterfactual outcome.

*Definition 2 (Counterfactual prompt). A counterfactual prompt is a textual encoding of a counterfactual query for some initial state $\sigma_0$.*

Returning again to FIG. 1, this example includes the counterfactual prompt 112. To create a comprehensive dataset $D_{CF}^{LLM}$ of counterfactuals based on an LLM (e.g., one of the models 220), the MA system 200 starts with the factual dataset $D_F^{LLM}$ (e.g., F_OUTPUTS_1 242A). From this dataset, the MA system 200 generates a set of initial states $\sigma_{0,i}$ = {X ↦ $x_i$, Y ↦ $y_i$, Z ↦ $z_i$}, which serve as the basis for deriving counterfactuals using the LLM. To compute PN and PS (e.g., PN_1 252A and PS_1 254A), the MA system 200 substitutes $D_F$ with $D_F^{LLM}$ and $D_{CF}$ with $D_{CF}^{LLM}$ in Equation (1).

Referring again to the example of FIG. 1, the MA system 200 constructs four distinct datasets using every integer in [1, 400], namely the factual dataset $D_F$, the counterfactual dataset $D_{CF}$, the LLM-based factual dataset $D_F^{LLM}$, and the LLM-based counterfactual dataset $D_{CF}^{LLM}$. These datasets, shown in FIG. 4, are generated following the causal model shown in FIG. 3B, its modified version with interventions, and the LLM prompting methods described above. In this example, the MA system 200 computes PN = 0.10 and PS = 0.50 for the datasets $D_F$ and $D_{CF}$ (e.g., as true_PN 262 and true_PS 264, respectively, of the true values 260). On the other hand, $PN^{GPT-4}$ = 0.984 and $PS^{GPT-4}$ = 0.505, when the factual dataset $D_F^{LLM}$ and counterfactual dataset $D_{CF}^{LLM}$ generated by the LLM GPT-4 are used, as shown in table 410.

Definition 3 ($\beta$-counterfactual consistency). Consider a structural causal model $\mathcal{M}_\mathcal{V}$ with variables $\mathcal{V}$ = {X, Y, Z}. Let $A_{X=x}(Z)$ be a function that generates counterfactuals for Y. Thus, A is said to be $\beta$-counterfactual with $M_\mathcal{V}$ if the following condition is satisfied:  $\mathbb{E}_{\mathbb{P}(X,Y,Z)}[A_{X=x}(Z = z) \neq Y_{X=x}(Z = z)] \leq \beta$, where $\beta \leq 0$.

$\beta$-counterfactual consistency defines the limit error rate for counterfactuals produced by $A_{X=x}(Z = z)$. This error rate should ideally be zero for an LLM that exhibits flawless computational reasoning performance. The following lemma specified the conditions necessary for this property to hold:

Lemma 1: Let $\mathcal{M}_\mathcal{V}$ , with variables $\mathcal{V}$ = {X, Y, Z}, be a structural causal model for a problem (Q, $\sigma_0$), and let M be an LLM that generates counterfactuals for Y. Then M is a $\beta$-counterfactual consistent with $\mathcal{M}_\mathcal{V}$ if and only if its associated HEX diagram for the problem (Q', $\sigma_0$), where Q' is the counterfactual version of Q, is commutative for all admissible values of X, Y, and Z.

In examples, three math problems are addressed, each with progressively higher difficulty.

Divisibility by 6 ("Div6"): PN and PS is computed to determine the impact that the divisibility of an integer N by 3 (denoted as $C_3$) has on its divisibility by 6 (denoted as $C_6$. For this example analysis, the integers N $\in$ [1, 400] are used.

Even sum of integers ("EvenSum"): Some examples also include scenarios where the sum of three integers M, N, and T is even. This can occur under two conditions: when all three integers are even, or when one is even and the other two are odd. Examples evaluate PN and PS for impact that M being odd or even ($C_M$) has on the resulting sum being odd or even ($C_{MNT}$). For this analysis, all possible values of M, N, and T are considered, with each integer ranging from 1 to 8.

CandyParty ("CandyParty"): In this hypothetical scenario, Rafa is having a birthday party with guests has Lara and Emma. They have 20 candies to distribute among themselves. The party will be considered 'happy' if the candy distribution satisfies at least one of the following conditions: (i) Each person gets the same number of candies, or (ii) Rafa gets more candies than both Lara and Emma, but Lara and Emma each receive an equal number of candies, with both receiving at least one candy each. The PN and PS are computed for the impact that Lara and Emma receiving an equal number of candies (denoted as $C_{lm}$) has on the party being 'happy' (denoted as $C_h$).

The reasoning graphs 412, 414 for the problems EvenSum and CandyParty, respectively, are shown in FIG. 4. PN and PS are estimated for each of these problems using three example language models: GPT-2, GPT-3.5-turbo, and GPT-4 (e.g., as models 220). The objective is to investigate whether the ability to reason, as conceptualized herein, emerges as the complexity and size of the models 220 grow. To assess the reasoning performance of various models 220, in examples, the MA system 200 uses the following metrics:

1. Factual Inconsistency Rate (FIR): This measures the rate of inconsistencies when the models respond to factual queries.

2. Counterfactual Inconsistency Rate (CIR): Similar to FIR, but this metric measures inconsistencies in responses to counterfactual queries.

The MA system 200 estimates the standard error for FIR and CIR by examining the variations in outputs across multiple model responses. Additionally, this variability is used to construct the densities over the inferred PN and PS. In examples, this process involves generating numerous (e.g., 500) bootstrap samples from the model's factual and counterfactual responses (e.g., outputs 240). From these densities, the MA system 200 calculates $\gamma$-PN-overlap, which measures the concentration of the probability distribution within a radius $\gamma$ around the actual PN, and $\gamma$-PS-overlap does the same for PS.

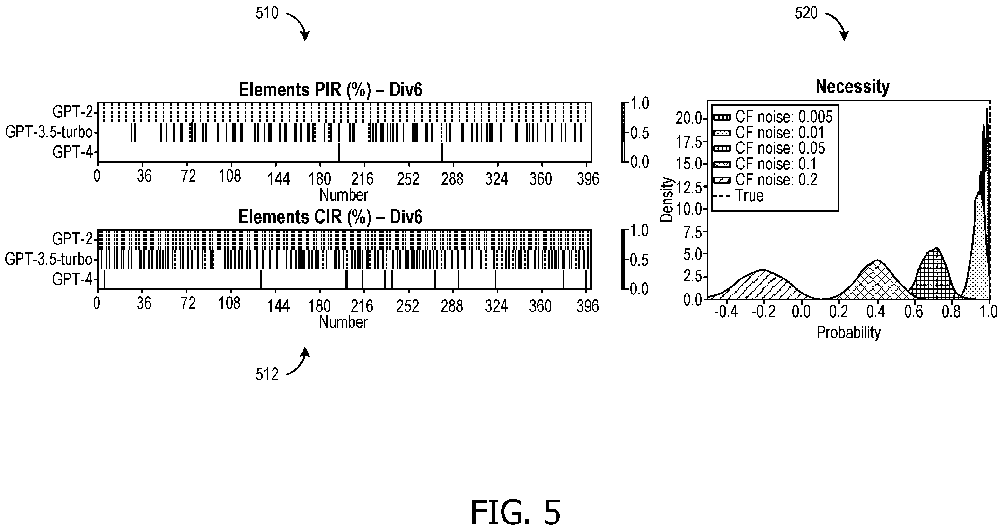

FIG. 5 shows heatmaps 510, 512 comparing the consistency of data generated by GPT-2, GPT-3.5-turbo, and GPT-4 for the Div6 problem. Each heatmap cell represents the error rate of the corresponding model 220 for each element of the problem across ten replicated tests. FIG. 5 also shows a graph 520 that illustrates the sensitivity of the simulated PN relative to varying levels of random noise introduced in the true counterfactuals. The heatmaps 510, 512 of FIG. 5 illustrate the alignment between the outputs of GPT-2, GPT-3.5-turbo, and GPT-4, and the factual generated outputs and counterfactuals for the Div6 problem. In the example, the shading within each cell of the heatmap 510, 512 indicates the degree of mismatch between model-generated outputs (e.g., outputs 240) and the true information (e.g., true values 260), with the color intensity reflecting the level of disagreement based on the ten answers from the models 220. As highlighted in FIG. 5, where the average disagreement across the first 100 columns of these heatmaps 510, 512 informs the results, more sophisticated models like GPT-4 demonstrate a closer match with the counterfactuals derived from the true reasoning graph.

Consider if the evaluation of reasoning truly requires PN and PS, or if it could be sufficiently assessed by examining only the inconsistency rates in factual/counterfactual data. FIG. 5 underscores the significance of PN and PS, presenting the estimated distributions of PN for the Div6 problem, based on 500 replicates under four scenarios where true counterfactuals are randomly altered with probabilities 0.005, 0.001, 0.05, 0.1 and 0.2. In the example, the greater the deviation from a dataset free of counterfactual errors, the more significant the discrepancy from the actual PN = 1 for this example. Notably, even minor perturbations can lead to substantial shifts in the estimated PN. For example, with a 0.05 probability of counterfactual perturbation, the estimated PN varies between 0.5 and 0.9. This suggests that relying solely on counterfactual errors could lead to an overestimation of the models' reasoning performance, particularly their analysis or interpretation of the necessary and sufficient conditions within a problem. Furthermore, a counterfactual error rate of 0.2 in this example results in entirely inconsistent (negative) probabilities due to the mismatch between the conditional and interventional distributions, as defined in Eq. 1.

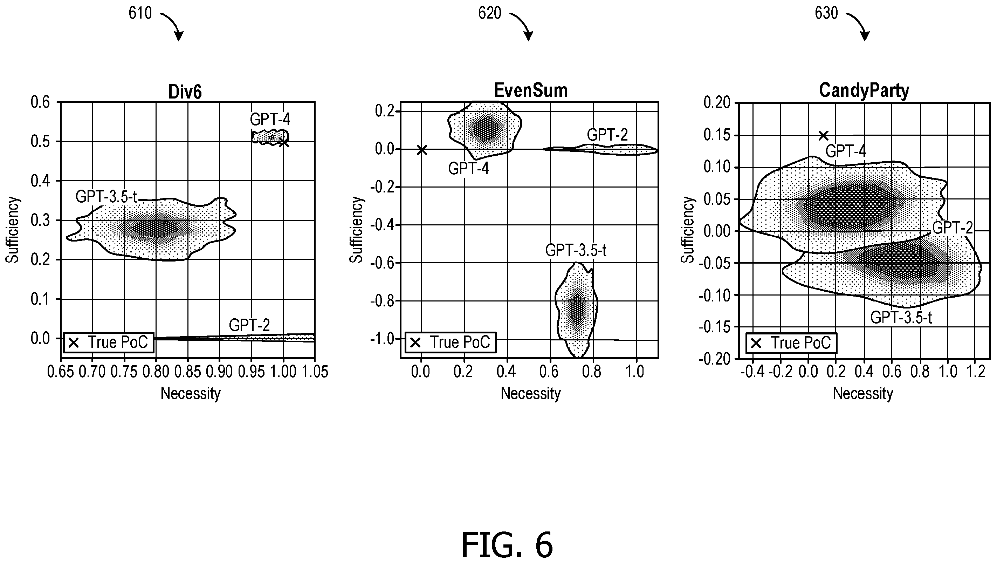

FIG. 6 includes three graphs 610, 620, 630 that illustrate the estimated PN and PS for each of the three example problems, obtained through bootstrap resampling. In the example, the MA system 200 computes the CIT, FIR, $\gamma$-PN-overlap, and $\gamma$-PS-overlap for the problems Div6, EvenSum, and CandyParty using GPT-2, GPT-3.5-turbo, and GPT-4. The graphs 610, 620, 630 of FIG. 6 illustrate true PN and PS (e.g., as true values 260) vs. inferred PN and PS (e.g., as analytics values 250) for these example models 220. The densities of the estimated probabilities capture the uncertainty associated with the responses by each model 220. Each density is labeled with the model that was used to generate such densities. The true values of the PS and PN in each problem is marked with a cross. A model is considered capable of reasoning if the PN-PS density estimates overlap with the true probabilities of causation. In these examples, such an overlap was only achieved by GPT-4 for Div6 problem, as shown in graph 610. Other results varied, indicating generally weak reasoning performance. Negative values of PN and PS in several instances, are due to inconsistencies in $D_F^{LLM}$ and $D_{CF}^{LLM}$. In some examples, the MA system 200 generates such graphs 610, 620, 630 and/or causes such graphs 610, 620, 630 to be displayed to a user.

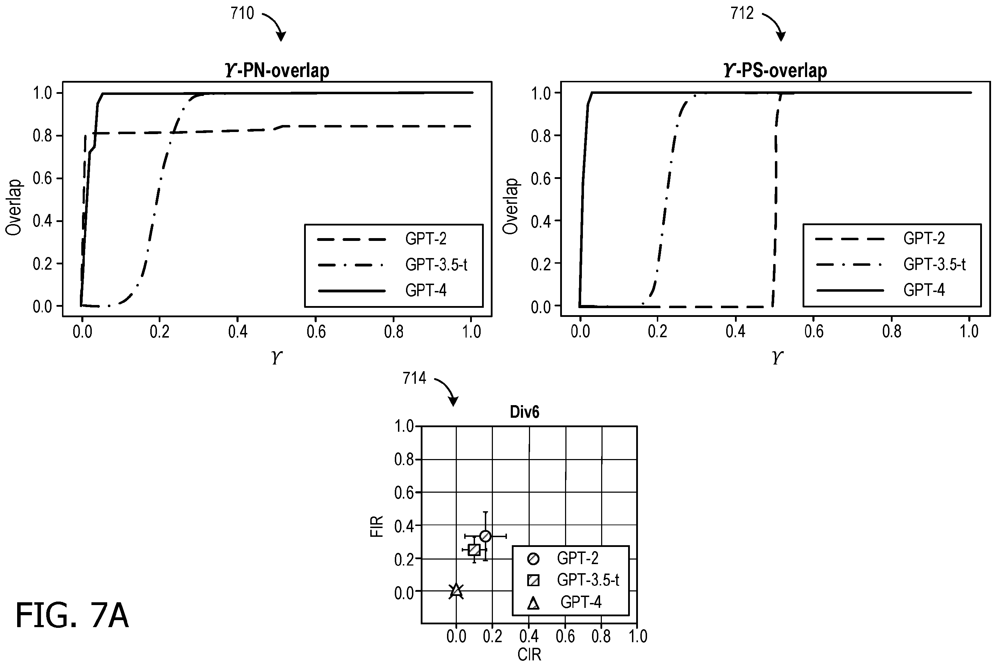

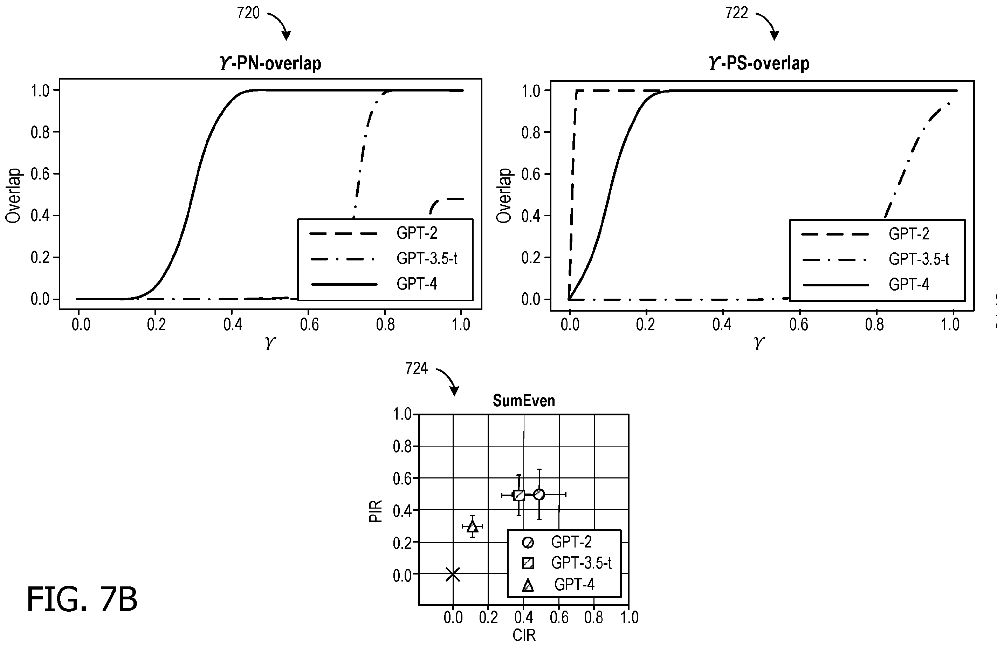

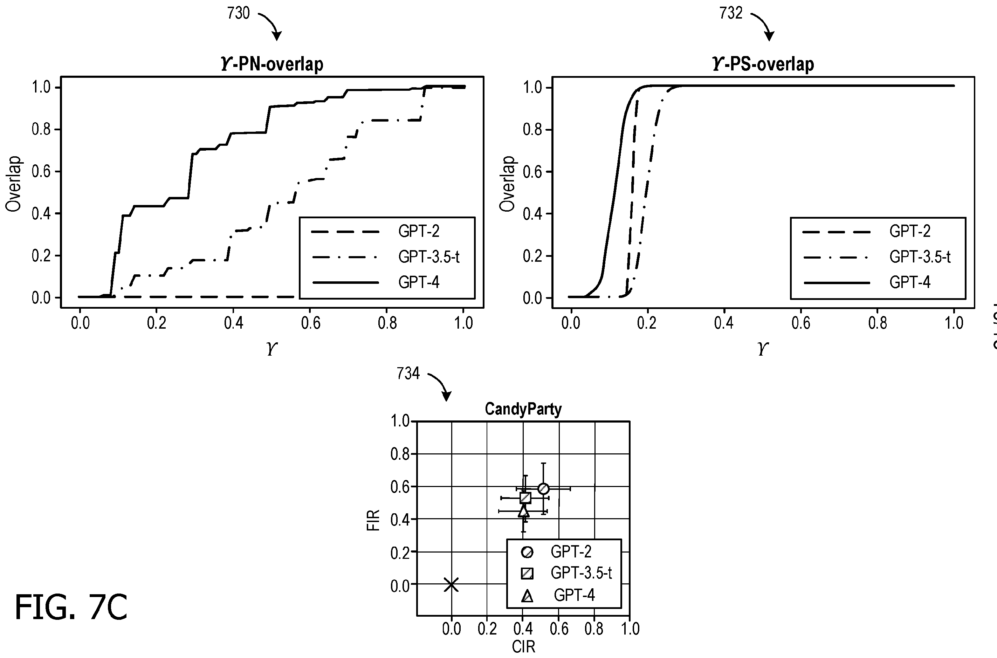

FIG. 7A to FIG. 7C illustrate reconstruction of the $\gamma$-PN-overlap and $\gamma$-PS-overlap curves for GPT-2, GPT-3.5-turbo, and GPT-4 for the three example problems. More specifically, FIG. 7A includes graphs 710, 712, and 714 for the DIV6 problem, FIG. 7B includes graphs 720, 722, and 724 for the SumEven problem, and FIG. 7C includes graphs 730, 732, and 734 for the CandyParty problem. FIG. 7A to FIG. 7C features the $\gamma$-PN-overlap and $\gamma$-PS-overlap curves for all models and problems, where ideal computational reasoning performance corresponds to the metrics equaling one for any value of $\gamma$. In this example, GPT-4 shows this level of computational reasoning performance for the Div6 problem. However, GPT-2 had an accurate PN for EvenSum, but the PS estimates are notably less accurate. Further, FIG. 7A to FIG. 7C also illustrates a visualization of FIR and CIR (with the standard deviations included brackets). Ideal computational reasoning performance is attained when both metrics are zero (denoted by an x in the right-side plots). An emerging trend towards computational reasoning is observed in the GPT family of models, particularly seen with GPT-4 for the Div6 problem. In some examples, the MA system 200 generates $\gamma$-PN-overlap graphs 710, 720, 730, $\gamma$-PS-overlap graphs 712, 722, 732, and/or FIR/CIR graphs 714, 724, 734 and causes such graphs to be displayed to a user.

One objective of this MA system 200 is to explore the computational reasoning performance of GAI models such as models 220 (e.g., LLMs), which is important for their successful deployment in a range of applications. Given the growing dependence on GAI models for complex reasoning tasks, such as mathematics, programming, or strategic planning, understanding this is significant. To evaluate computational reasoning performance, the MA system 200 provides a novel framework that employs probabilistic measures of necessity and sufficiency. These examples identify that, while various models (e.g., GPT-2, GPT-3.5-turbo, and GPT-4) can replicate aspects of reasoning to some degree, they often falter when it comes to counterfactual reasoning. Notably, the ability to reason, as defined herein, does improve with more complex models, yet the models are still far from flawless. This observation leads to the question of whether future versions of these models will achieve perfect reasoning performance. The example results are significant, as they reveal the limitations of GAI models, and emphasize the need for further research to enhance their computational reasoning performance.

Evaluating the computational reasoning performance of models 220 is important as it significantly influences their effectiveness in various domains. In education and research, it is important for the model to be able to provide accurate explanations and to formulate meaningful hypotheses. In the commercial sector, the effectiveness of automated processes/systems relies heavily on how well the model can reason. When it comes to accessibility, it is advantageous if the model is able to analyze and meet diverse user needs, which hinges on its reasoning performance. Moreover, identifying and mitigating biases in GAI systems, a key aspect of ethical and equitable GAI, involves a detailed examination of the models' computational reasoning processes. Therefore, while GAI models hold immense promise, ensuring their responsible and beneficial use is predicated on a thorough appraisal of their computational reasoning performance. The MA system 200 described herein is an important step in this direction.

While LLMs have been used as example models 220 in some examples described herein, it should be understood that other GAI models may similarly be used.

Additional Details

*Definition 4 (Causal Model). A causal model M is a triple <X, $\mathcal{F}$, ε> where:*

    *1. X = {$X_1$, ..., $X_n$} is a set of endogenous variables;*

    *2. ε = {$ε_1$, ..., $ε_n$} is a set of exogenous variables. The exogenous variables ε are assumed to be independent of each other and represent the unobserved factors that influence the values of X.*

    *3. $\mathcal{F}$ = {$f_1$, ..., $f_n$} is a set of functions. Each function $f_i$ determines the value of $X_i$ as a function of its parents $PA_i \subseteq X \cup ε$, where $PA_i$ are the variables that directly cause $X_i$.*

Any causal model can be represented by a directed acyclic graph (DAG) G, where the nodes represent the variables X, and the edges are the direct causal relationships between these variables. Let *T* be a subset of variables in *X*, and *t* be a specific realization of the values these variables can take. Thus a submodel $\mathcal{M}_{T=t}$ is defined to be a causal model <X, $\mathcal{F}$, ε>, where $\mathcal{F}_t$ = { $f_i : X_i \notin T$} $\cup$ { $T = t$ }.

*Definition 5 (Intervention, do operator). Consider a causal model M = <X, $\mathcal{F}$, ε>, with T being a subset of variables in X, and t a particular realization of T. The effect of the intervention do(T=t) in M is given by the submodel $\mathcal{M}_{T=t}$.*

*Definition 6 (Potential outcome and counterfactual). Let Y be a variable in X, and let T be a subset of X. The potential outcome of Y resulting from the intervention do(T=t), denoted by $Y_{T=t}(ε) = y$, is the solution for Y in the set of equations $\mathcal{F}_t$. A counterfactual is defined as the potential outcome $Y_{T=t}(ε)$ for the hypothetical scenario "what would the value of Y have been if T had been set to t".*

A distribution $\mathbb{P}$ over the exogenous variables ε establishes a corresponding probability distribution over the endogenous variables X as well as the potential outcomes. In practical applications, $\mathbb{P}(ε)$ characterizes the target population of the study. The probability of a counterfactual $Y_{X=x'}$ induced by the submodel $\mathcal{M}_{X=x}$ is:

$$\mathbb{P}(Y_{X=x} = y) = \sum_{\{ε | Y_{X=x}(ε)=y\}} \mathbb{P}(ε).$$

In addition, probabilities of the type $\mathbb{P}(Y_{X=x'} \mid X = x, Y = y)$ can be computed as:

$$\mathbb{P}(Y_{X=x'} = y' \mid X = x, Y = y) = \sum_{ε} \mathbb{P}(Y_{X=x'}(ε) = y')\mathbb{P}(ε \mid X = x, Y = y).$$

By conditioning on X=x and Y=y, the counterfactual outcome *y'* under the intervention *do(X=x')* is the expectation of the index function $Y_{X=x}(ε) = y'$ with respect to the updated probability distribution $\mathbb{P}(ε \mid X = x, Y = y)$. Three special cases of distributions of this type are of special interest.

*Definition 7 (Probability of necessity). Let X and Y be two binary variables in a causal model $\mathcal{M}$ = <X,*

$\mathcal{f}$ , $\varepsilon$>. The probability of necessity (PN) is defined as:

$$PN := \mathbb{P}(Y_{X=x'} = y' \mid X = x, Y = y).$$

Definition 8 (Probability of sufficiency). Let X and Y be two binary variables in a causal model $\mathcal{M}$ = <X, $\mathcal{f}$ , $\varepsilon$>. The probability of sufficiency (PS) is defined as:

$$PS := \mathbb{P}(Y_{X=x} = y \mid X = x', Y = y').$$

The PN is the probability of observing a different outcome in the absence of the event X=x. The PS is the probability of X to generate y in cases where both had different values (x' and y').

Definition 9 (Probability of necessity and sufficiency). Let X and Y be two binary variables in a causal model M = <X, $\mathcal{f}$ , $\varepsilon$>. The probability of necessity and sufficiency (PNS) is defined as:

$$PNS := \mathbb{P}(y_x, y'_{x'}) = \mathbb{P}(x, y)PN + \mathbb{P}(x', y')PS.$$

The PNS computes the probability that X=x is the only way to obtaining Y=y. In other words, the probability that X=x is both necessary and sufficient to observe Y=y. The probabilities PN, PS, and PNS are not identifiable with observational or experimental data unless Y is monotonic with respect to X, and both observational and experimental data are available. If this condition is satisfied, then they are identifiable and can be computed as follows:

$$PN = \frac{\mathbb{P}(y) - \mathbb{P}(y \mid do(x'))}{\mathbb{P}(x, y)} \; and \; PS = \frac{\mathbb{P}(y \mid do(x)) - \mathbb{P}(y)}{\mathbb{P}(x', y')}. \qquad (2)$$

Note that PN and PS require the knowledge of do(X=x) and do(X=x'). These quantities are generally observed for the whole population since observed individuals are only subject to one of the two conditions, unless experimental data is available.

Consider the congruent preferences (ConPref) problem: Consider three real numbers M, N, and T. If $M \le N$ and $N \le T$, then $M \le T$. PN and PS are computed for the condition $M \le N$ ($C_{mn}$) to having enough evidence to know if $M \le T$ ($C_{mnt}$). If $M \le N$ or $N \le T$ are false, then $C_{mnt}$ is false. For this evaluation, all combinations of values for M, N, and T are considered for numbers between 1 and 8.

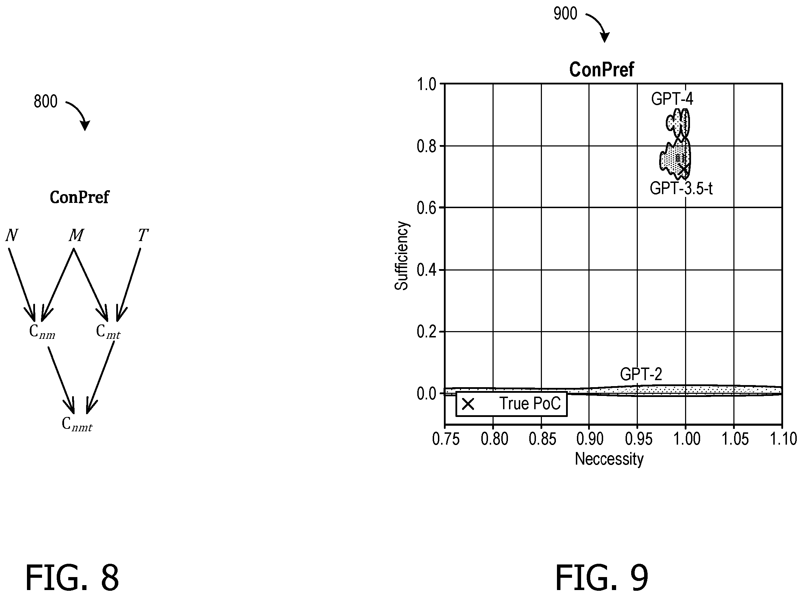

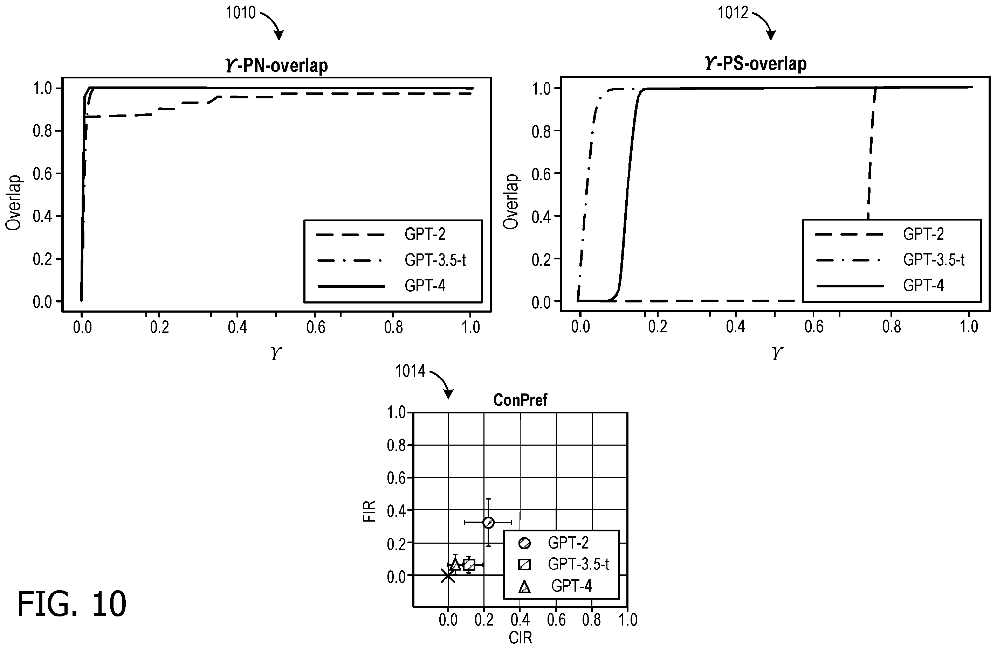

FIG. 8 is an example reasoning graph 800 for the ConPref problem. FIG. 9 is an example graph 900 illustrating true PN and PS versus inferred PN and PS using GPT-2, GPT-3.5-turbo, and GPT-4 for the ConPref problem. FIG. 10 includes three graphs 1010, 1012, 1014 that illustrate the reconstruction of the $\gamma$-PN-overlap and $\gamma$-PS-overlap curves for GPT-2, GPT-3.5-turbo, and GPT-4 for the ConPref problem, as well as a visualization of FIR and CIR. Ideal computational reasoning performance is achieved when the overlap is one for all values of $\gamma$, and when both FIR and CIR are zero (denoted by an x in FIG. 10).

Structural Equations for Example Problems

Regarding the Div6 problem:

$$N \sim \mathbb{P}_N$$

$$C_2 = N \ (mod \ 3) \equiv 0$$

$$C_3 = N \ (mod \ 2) \equiv 0$$

$$C_6 = C_2 \wedge C_3,$$

where $C_2$, $C_3$, and $C_6$ represent Boolean values that indicate whether the number is divisible by 2, 3, and 6, respectively.

$\mathbb{P}_N$ is the mechanism for generating the original numbers (1 to 400 in these examples).

Regarding the EvenSum problem:

$$N \sim \mathbb{P}_N$$

$$M \sim \mathbb{P}_M$$

$$T \sim \mathbb{P}_T$$

$$C_n = N \ (mod \ 2)$$

$$C_m = M \ (mod \ 2)$$

$$C_t = T \ (mod \ 2)$$

$$C_{nmt} = (C_n + C_m + C_t = 1) \wedge (C_n + C_m + C_t = 3),$$

where $C_n$, $C_m$, $C_t$, and $C_{nmt}$ represent Boolean values and $\mathbb{P}_N$, $\mathbb{P}_M$, and $\mathbb{P}_T$ are the mechanisms to generate the original numbers (1 to 8 in these examples).

Regarding the ConPref problem:

$$N \sim \mathbb{P}_N$$

$$M \sim \mathbb{P}_M$$

$$T \sim \mathbb{P}_T$$

$$C_{nm} = N \leq M$$

$$C_{mt} = M \leq T$$

$$C_{nmt} = C_{nm} \wedge C_{mt} \,,$$

where $C_{nm}$, $C_{mt}$, and $C_{nmt}$ represent Boolean values and $\mathbb{P}_N$, $\mathbb{P}_M$, and $\mathbb{P}_T$ are the mechanisms to generate the original numbers (1 to 8 in these examples).

Regarding the CandyParty problem:

$$R \sim \mathbb{P}_R$$

$$L \sim \mathbb{P}_L$$

$$E \sim \mathbb{P}_E$$

$$C_{r>0} = R > 0$$

$$C_{l>0} = L > 0$$

$$C_{e>0} = E > 0$$

$$C_{r\geq 2} = R \geq 2$$

$$C_{l\geq 2} = L \geq 2$$

$$C_{e\geq 2} = E \geq 2$$

$$C_{rl} = R > L$$

$$C_{re} = R > E$$

$$C_{l=e} = L = E$$

$$C_{r\geq 0,l\geq 0,e\geq 0} = C_{r\geq 0} \wedge C_{l\geq 0} \wedge C_{e\geq 0}$$

$$C_{r>l,r>e} = C_{rl} \wedge C_{re}$$

$$C_{r\geq 2,l\geq 2,e\geq 2} = C_{r\geq 2} \wedge C_{l\geq 2} \wedge C_{e\geq 2}$$

$$C_h = \left(C_{r\geq 2,l\geq 2,e\geq 2} = 1\right) \wedge \left(C_{l=e} \vee C_{r\geq 0,l\geq 0,e\geq 0}\right),$$

where $\mathbb{P}_R$, $\mathbb{P}_L$, and $\mathbb{P}_E$ are the mechanisms to generate the original numbers (all combinations in which 20 candies can be shared in these examples).

Regarding proof of LLMs Zero-counterfactual consistency, commutability of the HEX diagram implies that all paths from $\sigma_0$ to $\sigma_1$ result in the same outcome. This holds for all counterfactuals, which implies that $Y_{X=x}^{LLM} = Y_{X=x}$ for any value of X and Z. Therefore, $\mathbb{E}_{\mathbb{P}(X,Y,Z)}\left[Y_{X=x}^{LLM} \neq Y_{X=x}\right] = 0$, for any $\mathbb{P}(X,Y,Z)$.

Example Direct and Counterfactual Prompts

Regarding the Div6 problem, an example direct prompt is: *"Does 6 divide {'X'}? Use the factor method to answer this question. Be as concise as possible. "* An example counterfactual prompt is: *"Imagine that {'X'} {'has' / 'has not'} 3 as a prime factor while retaining all its other prime factors. With this assumption, does {self.divisor} divide {'X'}? Use the factor method to answer this question. Be as concise as possible. "*

Regarding the EvenSum problem, an example direct prompt is: *"Let N, M, and T be three integers. Then N+M+T is even if the three numbers are even or if only one is even and the remaining two are odd. Consider the numbers N={N}, M={M}, and T={T} and imagine that N {is / is not} even. With this assumption, is N+M+T even? Be as concise as possible. "* An example counterfactual prompt is: *"Let N, M, and T be three integers. Then N+M+T is even if the three numbers are even or if only one is even and the remaining two are odd. Consider the numbers N={N}, M={M}, and T={T}. Is N+M+T even? Be as concise as possible. "*

Regarding the ConPref problem, an example direct prompt is: *"Let N, M, and T be three integers. We know that if N is smaller or equal to M and M is smaller or equal to T, then N is smaller than or equal to T. Consider the numbers N={N}, M={M}, and T={T}. By only looking at the relationships (N={N} vs. M={M}) and (M={M} vs. T={T}), can we know if N is smaller or equal to T? Be as concise as possible. "* An example counterfactual prompt is: *"Let N, M, and T be three integers. We know that if N is smaller or equal to M and M is smaller or equal to T, then N is smaller or equal to T. Consider the numbers N= {N}, M={M}, and T={T}. Now imagine that the number N { 'is smaller or equal' / 'is not smaller or equal' } than M. Even if this contradicts the values of the numbers X and Y, use this assumption and the relationship between M={M} and T={T}, to decide if can we tell if N is smaller or equal than T? Do not make any conclusion or comment based on the values, just based on the assumption and the relationships. Be as concise as possible. "*

Regarding the CandyParty problem, an example direct prompt is: *"Rafa has invited Lara and Emma to his birthday party. He has {num_candies} to distribute among them. They all will be happy in the party in one of the following cases: 1) Each of them gets at least 2 candies or (2) Lara and Emma get the same number of candies, but at least one candy each, and Rafa gets more than them. After distributing the candies, Lara gets {L}, Emma gets {E}, and Rafa gets {R} candies. With this candies distribution, will they all be happy in the party? Be as concise as possible. "* An example counterfactual prompt is: *"Rafa has invited Lara and Emma to his birthday party. He has {num_candies} candies to distribute among them. They all will be happy in the party in one of the following cases: 1) each of them gets at least 2 candies or 2) Lara and Emma get the same number of candies, but at least one candy each, and Rafa gets more than them after distributing the candies. After distributing the candies, Lara gets {L}, Emma gets {E}, and Rafa gets {R} candies. Consider the number of candies distributed to each of them and imagine that they think that { 'Lara and Emma have the same number of candies' / 'Lara and Emma have different number of candies' }. With this assumption, will they all be happy in the party? Be as concise as possible. "*

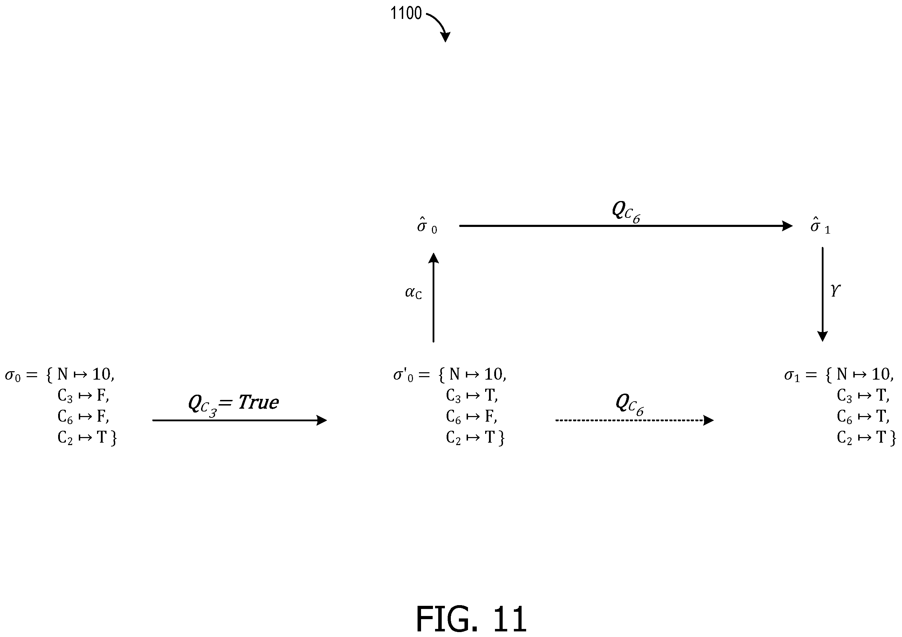

FIG. 11 is a HEX diagram 1100 for an example counterfactual query in the Div6 problem. The query is split into two sub-queries, $Q_{C_3=True}$ and $Q_{C_6}$, that performs the two operations used to compute the counterfactual state. $Q_{C_3=True}$ only sets the value of $C_3$ to True. $Q_{C_6}$ replaces the value of $C_6$ by its counterfactual. This operation can be executed via the concrete path (e.g., using the structural causal model of the problem) by using an LLM.

Regarding evaluation metrics, let $n$ be the number of instances of each problem. For example, $n = 400$ for the Div6 problem, because the first 400 integers are used to test reasoning. For the intervention node X and the outcome node Y, the MA system 200 distinguishes between factual generated output Y|X (simulated from the original reasoning graph) and counterfactual generated output $Y_{X=x}$ (simulated from the intervened graph). The LLM versions of these quantities are denoted as $Y^{LLM} \mid X = x$ and $Y^{LLM}_{X=x}$, which are computed via factual and counterfactual prompts.

$$FIR := \frac{1}{n} \sum_{i=1}^{n} \mathbb{I}[(Y^{LLM}|X = x) \neq (Y|X = x)]. \tag{3}$$

$$CIR := \frac{1}{n} \sum_{i=1}^{n} \mathbb{I}[Y^{LLM}_{X=x} \neq Y_{X=x}]. \tag{4}$$

Let $m$ be the number of bootstrap samples used from the binary answers of the LLM. $\widehat{PN}_i$ and $\widehat{PS}_i$ are estimations of PN and PS for the ith bootstrap sample. Then:

$$\gamma - PNO := \frac{1}{m} \sum_{j=1}^{m} \mathbb{I}[|\widehat{PN}^{LLM}_i - PN| \leq \gamma]. \tag{5}$$

$$\gamma - PNS := \frac{1}{m} \sum_{j=1}^{m} \mathbb{I}[|\widehat{PS}^{LLM}_i - PS| \leq \gamma]. \tag{6}$$

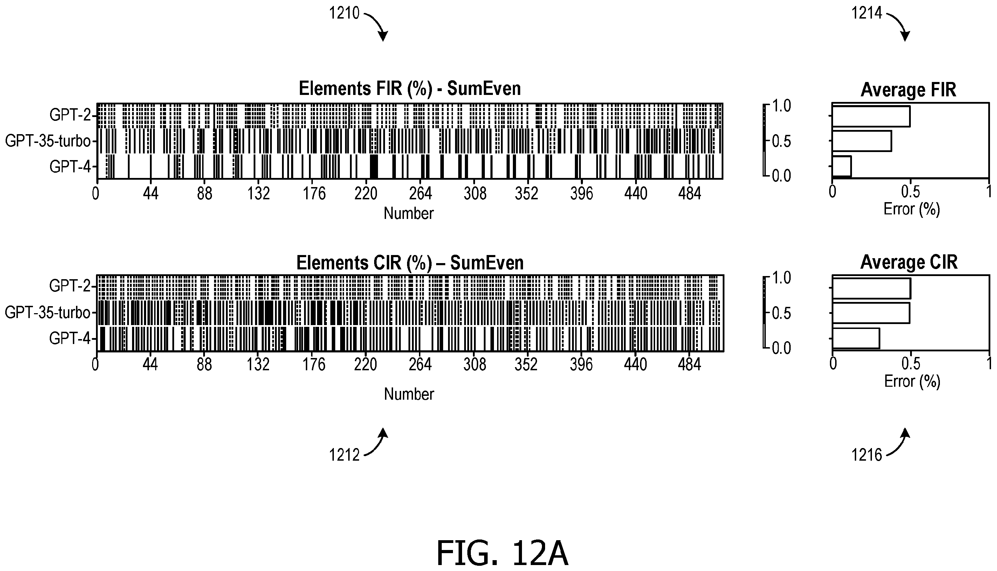

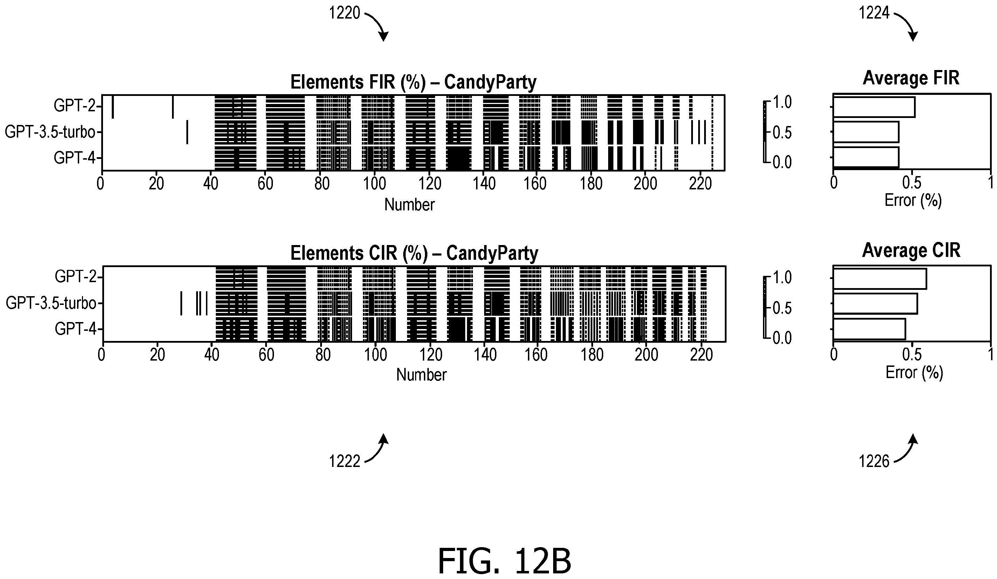

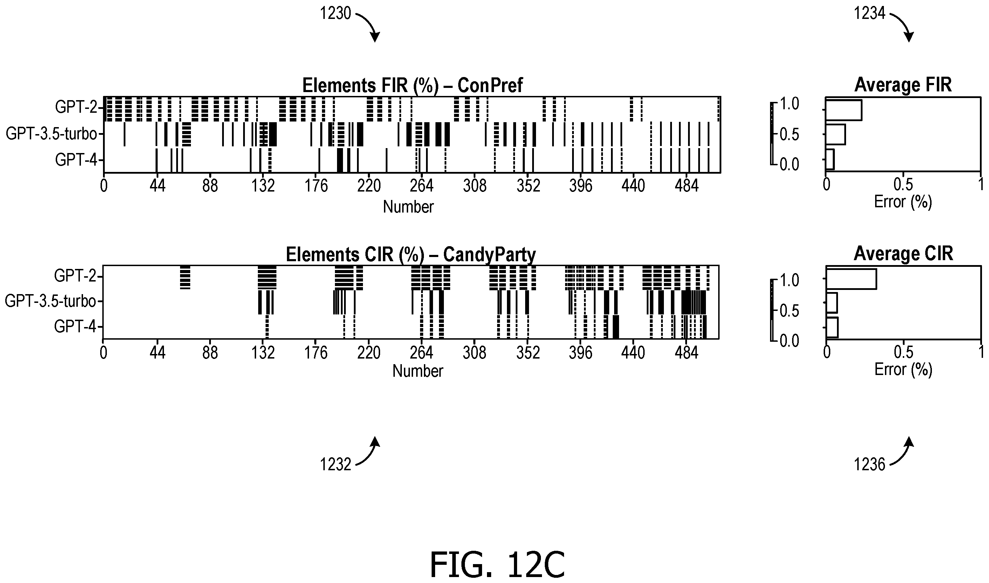

FIGs. 12A to 12C illustrate element and aggregated CIR and FIR for the SumEven, CandyParty, and ConPref problems. More specifically, FIG. 12A includes graphs 1210, 1212, 1214, and 1216 related to analytics of the SumEven problem, FIG. 12B includes graphs 1220, 1222, 1224, and 1226 related to analytics of the CandyParty problem, and FIG.

12C includes graphs 1230, 1232, 1234, and 1236 related to analytics of the ConPref problem.

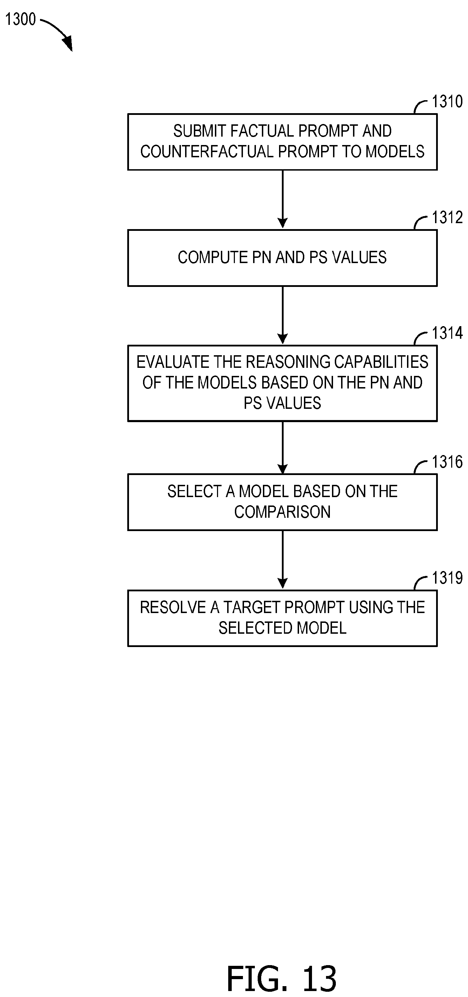

FIG. 13 is a flowchart 1300 of an example process for evaluating computational reasoning performance of GAI models. In examples, the process is performed by the MA device 210 while evaluating one or more models 220 using testing inputs 230 shown in FIG. 2. In the example, at operation 1310, the MA device 210 inputs factual prompts (e.g., factual prompts 232) and counterfactual prompts (e.g., counterfactual prompts 234) to first and second GAI models (e.g., models 220A, 220B), thereby generating factual outputs (e.g., F_OUTPUTS_1 242A, F_OUTPUTS_2 242B) and counterfactual outputs (e.g., CF_OUTPUTS_1 244A, CF_OUTPUTS_2 244B) from each of the first and second GAI models. At operation 1312, the MA device 210 computes probability of necessity (PN) (e.g., PN_1 252A, PN_1 252B) and probability of sufficiency (PS) (e.g., PS_1 254A, PS_1 254B) values for each of the first and second GAI models based on the factual outputs and counterfactual outputs.

At operation 1314, the MA device 210 evaluates the reasoning performance of the first GAI model relative to the second GAI model based on the respective PN and PS values. At operation 1316, the MA device 210 selects one of the first GAI model or the second GAI model based on the comparison. At operation 1318, the MA device 210 submits a target prompt using the selected one of the first GAI model and the second GAI model.

In some examples, the MA device 210 also identifies a reference PN value (e.g., true_PN 262) and reference PS value (e.g., true_PS 264) for the factual prompts and counterfactual prompts, wherein comparing the computational reasoning performance of the first GAI model relative to the second GAI model further includes comparing the PN and PS values to the reference PN value and reference PS value. In some examples, identifying the reference PN value and reference PS value further includes computing one or more of the reference PN value and the reference PS value based on the factual prompts, the counterfactual prompts, a first reasoning graph associated with the factual prompts, and a second reasoning graph associated with the counterfactual prompts.

In some examples, the MA device 210 also automatically generates one or more of the factual prompts and the counterfactual prompts by inserting an incrementing number into a template prompt. In some examples, the MA device 210 also computes a factual inconsistency rate (FIR) based on the factual outputs and a counterfactual inconsistency rate (CIR) based on the counterfactual outputs for each of the first and second GAI models, and displays a graph (e.g., graphs 714, 724, 734) plotting the FIR against the CIR for each of the first and second GAI models.

In some examples, the MA device 210 also displays a graph (e.g., graphs 610, 620, 630) plotting (1) a reference data point based on a reference PN value and a reference PS value for the factual prompts and counterfactual prompts and (2) estimated probability densities for each of the first and second GAI models representing the uncertainty associated with the responses of each GAI model. In some examples, the MA device 210 also displays a heatmap graph (e.g., graphs 510, 520) that represents the error rate of the first and second GAI models for each element of a problem associated with the factual prompts and the counterfactual prompts.

<u>Additional Examples</u>

An example model analytics system for evaluating computational reasoning performance of artificial intelligence models comprises: a processor; and a memory comprising computer-readable instructions, the processor, the memory and the computer-readable instructions configured to cause the processor to: submit factual prompts and counterfactual prompts to first and second GAI models, thereby generating factual outputs and counterfactual outputs from each of the first and second GAI models; compute probability of necessity (PN) and probability of sufficiency (PS) values for each of the first and second GAI models based on the factual outputs and counterfactual outputs; compare the computational reasoning performance of the first GAI model relative to the second GAI model based on the PN and PS values; select one of the first GAI model or the second GAI model based on the comparison; and submit a target prompt using the selected one of the first GAI model and the second GAI model.

An example computer-implemented method for evaluating reasoning performance of GAI models comprises: inputting factual prompts and counterfactual prompts to first and second GAI models, thereby generating factual outputs and counterfactual outputs from each of the first and second GAI models; computing probability of necessity (PN) and probability of sufficiency (PS) values for each of the first and second GAI models based on the factual outputs and counterfactual outputs; evaluating the reasoning performance of the first GAI model relative to the second GAI model based on the respective PN and PS values; selecting one of the first GAI model or the second GAI model based on the comparison; and submitting a target prompt using the selected one of the first GAI model and the second GAI model.

An example computer storage medium having computer-executable instructions that, upon execution by a processor of a computer, cause the processor to at least: submit factual prompts and counterfactual prompts to first and second GAI models, thereby generating factual outputs and counterfactual outputs from each of the first and second GAI models; compute probability of necessity (PN) and probability of sufficiency (PS) values for each of the first and second GAI models based on the factual outputs and counterfactual outputs; compare the reasoning performance of the first GAI model relative to the second GAI model based on the PN and PS values; select one of the first GAI model or the second GAI model based on the comparison; and resolve a target prompt using the selected one of the first GAI model and the second GAI model.

Alternatively, or in addition to the other examples described herein, examples include any combination of the following:

- inputting factual prompts and counterfactual prompts to first and second GAI models;
- generating factual outputs and counterfactual outputs from each of the first and second GAI models;
- computing one or more of a probability of necessity (PN) value and a probability of sufficiency (PS) value for an LLM;
- computing probability of necessity (PN) and probability of sufficiency (PS) values for each of the first and second GAI models based on the factual outputs and counterfactual outputs;
- evaluating the computational reasoning performance of the first GAI model relative to the second GAI model based on the respective PN and PS values;
- selecting one of the first GAI model or the second GAI model based on the comparison;
- submitting a target prompt using the selected one of the first GAI model and the second GAI model;
- identifying a reference PN value and reference PS value for the factual prompts and counterfactual prompts;
- comparing the PN and PS values to the reference PN value and reference PS value;
- computing one or more of the reference PN value and the reference PS value based on the factual prompts, the counterfactual prompts, a first reasoning graph associated with the factual prompts, and a second reasoning graph associated with the counterfactual prompts;
- automatically generating one or more of the factual prompts and the counterfactual prompts by inserting an incrementing number into a template prompt;
- computing a factual inconsistency rate (FIR) based on the factual outputs and a counterfactual inconsistency rate (CIR) based on the counterfactual outputs for each of the first and second GAI models;
- displaying a graph plotting the FIR against the CIR for each of the first and second GAI models;
- generating, displaying, and/or causing to be displayed a graph plotting (1) a reference data point based on a reference PN value and a reference PS value for the factual prompts and counterfactual prompts and (2) estimated probability densities for each of the first and second GAI models representing the uncertainty associated with the responses of each GAI model;
- generating, displaying, and/or causing to be displayed a heatmap graph that represents the error rate of the first and second GAI models for each element of a problem associated with the factual prompts and the counterfactual prompts
- submit both a factual prompt and a counterfactual prompt to both a first GAI model and a second GAI model, thereby generating a first factual output and a first counterfactual output from the first GAI model and a second factual output and a second counterfactual output from the second GAI model;
- compute a first probability of necessity (PN) value and a first probability of sufficiency (PS) value for the first GAI model using the first factual output and the first counterfactual output;
- compute a second PN value and a second PS value for the second GAI model based on the second factual output and the second counterfactual output;
- compare the computational reasoning performance of the first GAI model relative to the computational reasoning performance of the second GAI model based on the first and second PN values and the first and second PS values;
- select one of the first GAI model or the second GAI model based on the comparison;
- submit a target prompt to the selected one of the first GAI model and the second GAI model;
- identify a baseline PN value and baseline PS value for the factual prompt and counterfactual prompt;
- comparing the computational reasoning performance of the first GAI model relative to the second GAI model further includes comparing the first and second PN values to the baseline PN value and the first and second PS values to the baseline PS value;
- identifying the baseline PN value and baseline PS value further includes computing one or more of the baseline PN value and the baseline PS value based on the factual prompt, the counterfactual prompt, a first reasoning graph associated with the factual prompt, and a second reasoning graph associated with the counterfactual prompt;
- automatically generate one or more of the factual prompt and the counterfactual prompt by inserting an incrementing number into a template prompt;
- compute a first factual inconsistency rate (FIR) based on the first factual output and a first counterfactual inconsistency rate (CIR) based on the first counterfactual output for the first GAI model;
- compute a second factual inconsistency rate (FIR) based on the second factual output and a second counterfactual inconsistency rate (CIR) based on the second counterfactual output for the second GAI model;
- generate a graph plotting one or more of the first FIR against the first CIR for the first GAI model and the second FIR against the second CIR for the second model;
- generate a graph plotting (1) a reference data point based on a baseline PN value and a baseline PS value for the factual prompt and counterfactual prompt and (2) estimated probability densities for the first and second GAI models representing uncertainty associated with the responses of the first and second GAI models;

- the target prompt includes input data including one or more of authentication logs of a computing device and network traffic data logs of the computing device;

- the target prompt includes text requesting identification of instances of anomalous activity within the input data;

- automatically cause a configuration change to be performed on the computing device;

- inputting a plurality of factual prompts and a plurality of counterfactual prompts to both a first GAI model and a second GAI model, thereby generating first factual outputs and first counterfactual outputs from the first GAI model and second factual outputs and second counterfactual outputs from the second GAI model;

- computing a first probability of necessity (PN) and a first probability of sufficiency (PS) value for the first GAI model based on the first factual outputs and first counterfactual outputs;

- computing a second probability of necessity (PN) and a second probability of sufficiency (PS) value for the second GAI model based on the second factual outputs and second counterfactual outputs;

- evaluating the reasoning performance of the first GAI model relative to the second GAI model based on the first and second PN values and the first and second PS values;

- selecting one of the first GAI model or the second GAI model based on the evaluation;

- identifying a reference PN value and reference PS value for the plurality of factual prompts and the plurality of counterfactual prompts,

- comparing the first and second PN values to the reference PN value and the first and second PS values to the reference PS value;

- computing one or more of the reference PN value and the reference PS value based on the plurality of factual prompts, the plurality of counterfactual prompts, a first reasoning graph associated with the plurality of factual prompts, and a second reasoning graph associated with the plurality of counterfactual prompts;

- automatically generating one or more of the plurality of factual prompts and the plurality of counterfactual prompts by inserting an incrementing number into a template prompt;

- computing a first factual inconsistency rate (FIR) based on the first factual outputs and a first counterfactual inconsistency rate (CIR) based on the first counterfactual outputs for the first GAI model;

- computing a second factual inconsistency rate (FIR) based on the second factual outputs and a second counterfactual inconsistency rate (CIR) based on the second counterfactual outputs for the second GAI model;

- displaying a graph plotting one or more of the first FIR against the first CIR for the first GAI model and the second FIR against the second CIR for the second model;

- displaying a graph plotting (1) a reference data point based on a reference PN value and a reference PS value for the plurality of factual prompts and the plurality of counterfactual prompts and (2) estimated probability densities for the first and second GAI models representing uncertainty associated with the responses of the first and second GAI models;

- displaying a heatmap graph that represents an error rate of the first and second GAI models for at least one element of a problem associated with the plurality of factual prompts and the plurality of counterfactual prompts.

While the aspects of the disclosure have been described in terms of various examples with their associated operations, a person skilled in the art would appreciate that a combination of operations from any number of different examples is also within scope of the aspects of the disclosure.

Exemplary Operating Environment

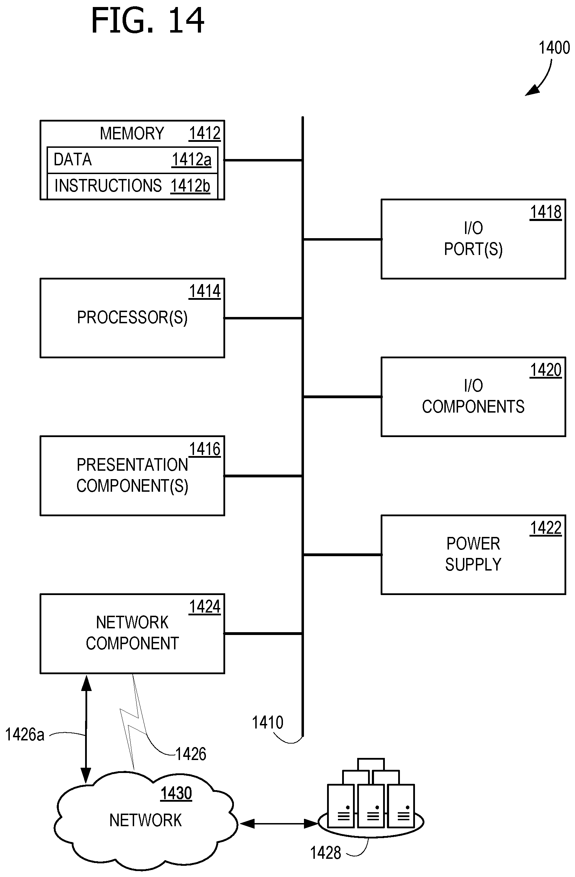

FIG. 14 is a block diagram of an example computing device 1400 (e.g., a computer storage device) for implementing aspects disclosed herein, and is designated generally as computing device 1400. In some examples, one or more computing devices 1400 are provided for an on-premises computing solution. In some examples, one or more computing devices 1400 are provided as a cloud computing solution. In some examples, a combination of on-premises and cloud computing solutions are used. Computing device 1400 is but one example of a suitable computing environment that can be used in system 100 (e.g., as MA device 210) and is not intended to suggest any limitation as to the scope of use or functionality of the examples disclosed herein, whether used singly or as part of a larger set. Neither should computing device 1400 be interpreted as having any dependency or requirement relating to any one or combination of components/modules illustrated.

The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 1400 includes a bus 1410 that directly or indirectly couples the following devices: computer storage memory 1412, one or more processors 1414, one or more presentation components 1416, input/output (I/O) ports 1418, I/O components 1420, a power supply 1422, and a network component 1424. While computing device 1400 is depicted as a seemingly single device, multiple computing devices 1400 may work together and share the depicted device resources. For example, memory 1412 may be distributed across multiple devices, and processor(s) 1414 may be housed with different devices.

Bus 1410 represents what may be one or more busses (such as an address bus, data bus, or a combination thereof). Although the various blocks of FIG. 14 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 14 and the references herein to a "computing device." Memory 1412 may take the form of the computer storage media referenced below and operatively provide storage of computer-readable instructions, data structures, program modules and other data for the computing device 1400. In some examples, memory 1412 stores one or more of an operating system, a universal application platform, or other program modules and program data. Memory 1412 is thus able to store and access data 1412a and instructions 1412b that are executable by processor 1414 and configured to carry out the various operations disclosed herein.

In some examples, memory 1412 includes computer storage media. Memory 1412 may include any quantity of memory associated with or accessible by the computing device 1400. Memory 1412 may be internal to the computing device 1400 (as shown in FIG. 14), external to the computing device 1400 (not shown), or both (not shown). Additionally, or alternatively, the memory 1412 may be distributed across multiple computing devices 1400, for example, in a virtualized environment in which instruction processing is carried out on multiple computing devices 1400. For the purposes of this disclosure, "computer storage media," "computer-storage memory," "memory," and "memory devices" are synonymous terms for the computer-storage memory 1412, and none of these terms include carrier waves or propagating signaling.

Processor(s) 1414 may include any quantity of processing units that read data from various entities, such as memory 1412 or I/O components 1420. Specifically, processor(s) 1414 are programmed to execute computer-executable instructions for implementing aspects of the disclosure. The instructions may be performed by the processor, by multiple processors within the computing device 1400, or by a processor external to the client computing device 1400. In some examples, the processor(s) 1414 are programmed to execute instructions such as those illustrated in the flow charts discussed below and depicted in the accompanying drawings. Moreover, in some examples, the processor(s) 1414 represents an implementation of analog techniques to perform the operations described herein. For example, the operations may be performed by an analog client computing device 1400 and/or a digital client computing device 1400. Presentation component(s) 1416 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 1400, across a wired connection, or in other ways. I/O ports 1418 allow computing device 1400 to be logically coupled to other devices including I/O components 1420, some of which may be built in. Example I/O components 1420 include, for example but without limitation, a microphone, joystick, game pad, satellite dish, scanner, printer, wireless device, etc.

Computing device 1400 may operate in a networked environment via the network component 1424 using logical connections to one or more remote computers. In some examples, the network component 1424 includes a network interface card and/or computer-executable instructions (e.g., a driver) for operating the network interface card. Communication between the computing device 1400 and other devices may occur using any protocol or mechanism over any wired or wireless connection. In some examples, network component 1424 is operable to communicate data over public, private, or hybrid (public and private) using a transfer protocol, between devices wirelessly using short range communication technologies (e.g., near-field communication (NFC), Bluetooth™ branded communications, or the like), or a combination thereof. Network component 1424 communicates over wireless communication link 1426 and/or a wired communication link 1426a to a remote resource 1428 (e.g., a cloud resource) across network 1430. Various different examples of communication links 1426 and 1426a include a wireless connection, a wired connection, and/or a dedicated link, and in some examples, at least a portion is routed through the internet.

Although described in connection with an example computing device 1400, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure do not include signals. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

**Claims**

**1.** A system (200) for evaluating computational reasoning performance of generative artificial intelligence (GAI) models, the system comprising:

a processor (1414); and
a memory (1412) comprising computer-readable instructions, the processor (1414), the memory (1412) and the computer-readable instructions configured to cause the processor (1414) to:

submit both a factual prompt (232) and a counterfactual prompt (234) to both a first GAI model (220A) and a second GAI model (220B), thereby generating a first factual output (242A) and a first counterfactual output (244A) from the first GAI model (240A) and a second factual output (242B) and a second counterfactual output (244B) from the second GAI model (240B);

compute a first probability of necessity (PN) value (252A) and a first probability of sufficiency (PS) value (254A) for the first GAI model (220A) using the first factual output (242A) and the first counterfactual output (244A);

compute a second PN value (252B) and a second PS value (254B) for the second GAI model (220B) based on the second factual output (242B) and the second counterfactual output (244B);

compare the computational reasoning performance of the first GAI model (220A) relative to the computational reasoning performance of the second GAI model (220B) based on the first and second PN values (252A, 252B) and the first and second PS values (254A, 254B);

select one of the first GAI model (220A) or the second GAI model (220B) based on the comparison; and

submit a target prompt to the selected one of the first GAI model (220A) and the second GAI model (220B).

2. The system of claim 1, wherein the processor (1414), the memory (1412) and the computer-readable instructions are further configured to cause the processor (1414) to:

identify a baseline PN value and baseline PS value for the factual prompt (232) and counterfactual prompt (234), wherein comparing the computational reasoning performance of the first GAI model (220A) relative to the second GAI model (220B) further includes comparing the first and second PN values (252A, 252B) to the baseline PN value and the first and second PS values (254A, 254B) to the baseline PS value, and

wherein identifying the baseline PN value and baseline PS value optionally further includes computing one or more of the baseline PN value and the baseline PS value based on the factual prompt (232), the counterfactual prompt (234), a first reasoning graph associated with the factual prompt (232), and a second reasoning graph associated with the counterfactual prompt (234).

3. The system of any preceding claim, wherein the processor (1414), the memory (1412) and the computer-readable instructions are further configured to cause the processor (1414) to:

compute a first factual inconsistency rate (FIR) based on the first factual output (242A) and a first counterfactual inconsistency rate (CIR) based on the first counterfactual output (244A) for the first GAI model (220A);

compute a second factual inconsistency rate (FIR) based on the second factual output (242B) and a second counterfactual inconsistency rate (CIR) based on the second counterfactual output (244B) for the second GAI model (220B); and

generate a graph plotting one or more of the first FIR against the first CIR for the first GAI model (220A) and the second FIR against the second CIR for the second model (220B).

4. The system of claim 1, wherein the processor (1414), the memory (1412) and the computer-readable instructions are further configured to cause the processor (1414) to generate a graph plotting (1) a reference data point based on a baseline PN value and a baseline PS value for the factual prompt (232) and counterfactual prompt (234) and (2) estimated probability densities for the first and second GAI models (220A, 220B) representing uncertainty associated with the responses of the first and second GAI models (220A, 220B).

5. The system of any preceding claim, wherein the target prompt includes input data including one or more of authentication logs of a computing device and network traffic data logs of the computing device, wherein the target prompt includes text requesting identification of instances of anomalous activity within the input data, wherein the processor (1414), the memory (1412) and the computer-readable instructions are further configured to cause the processor (1414) to automatically cause a configuration change to be performed on the computing device.

6. A computer-implemented method for evaluating reasoning performance of generative artificial intelligence (GAI) models, the method comprising:

inputting a plurality of factual prompts (232) and a plurality of counterfactual prompts (234) to both a first GAI model (220A) and a second GAI model (220B), thereby generating first factual outputs (242A) and first counterfactual outputs (244A) from the first GAI model (220A) and second factual outputs (242B) and second counterfactual outputs (244B) from the second GAI model (220B);

computing a first probability of necessity (PN) (242A) and a first probability of sufficiency (PS) value (254A) for the first GAI model (220A) based on the first factual outputs (242A) and first counterfactual outputs (244A);

computing a second probability of necessity (PN) (252B) and a second probability of sufficiency (PS) value (254B) for the second GAI model (220B) based on the second factual outputs (242B) and second counterfactual outputs (244B);

evaluating the reasoning performance of the first GAI model (220A) relative to the second GAI model (220B) based on the first and second PN values (252A, 252B) and the first and second PS values (254A, 254B); and selecting one of the first GAI model (220A) or the second GAI model (220B) based on the evaluation.

7. The computer-implemented method of claim 6, further comprising:

identifying a reference PN value and reference PS value for the plurality of factual prompts (232) and the plurality of counterfactual prompts (234),
wherein comparing the reasoning performance of the first GAI model (220A) relative to the second GAI model (220B) further includes comparing the first and second PN values (252A, 252B) to the reference PN value and the first and second PS values (254A, 254B) to the reference PS value, and
wherein identifying the reference PN value and reference PS value optionally further includes computing one or more of the reference PN value and the reference PS value based on the plurality of factual prompts (232), the plurality of counterfactual prompts (234), a first reasoning graph associated with the plurality of factual prompts (232), and a second reasoning graph associated with the plurality of counterfactual prompts (234).

8. The computer-implemented method of claims 6 or 7, further comprising automatically generating one or more of the plurality of factual prompts (232) and the plurality of counterfactual prompts (234) by inserting an incrementing number into a template prompt.

9. The computer-implemented method of any of claims 6 to 8, further comprising:

computing a first factual inconsistency rate (FIR) based on the first factual outputs (242A) and a first counterfactual inconsistency rate (CIR) based on the first counterfactual outputs (244A) for the first GAI model (220A);
computing a second factual inconsistency rate (FIR) based on the second factual outputs (242B) and a second counterfactual inconsistency rate (CIR) based on the second counterfactual outputs (244B) for the second GAI model (220B); and
displaying a graph plotting one or more of the first FIR against the first CIR for the first GAI model (220A) and the second FIR against the second CIR for the second model (220B).

10. The computer-implemented method of claim 6, further comprising displaying a graph plotting (1) a reference data point based on a reference PN value and a reference PS value for the plurality of factual prompts (232) and the plurality of counterfactual prompts (234) and (2) estimated probability densities for the first and second GAI models (220A, 220B) representing uncertainty associated with the responses of the first and second GAI models (220A, 220B).

11. The computer-implemented method of any of claims 6 to 10, further comprising displaying a heatmap graph that represents an error rate of the first and second GAI models (220A, 220B) for at least one element of a problem associated with the plurality of factual prompts (232) and the plurality of counterfactual prompts (234).

12. A computer storage medium having computer-executable instructions that, upon execution by a processor (1414) of a computer, cause the processor (1414) to at least:

submit a factual prompt and counterfactual prompt to both a first and a second large language models (LLM), thereby generating a first factual output and a first counterfactual output from the first LLM and a second factual output and a second counterfactual output from the second LLM;
compute a first probability of necessity (PN) value and a first probability of sufficiency (PS) value for the first LLM based on the first factual output and the first counterfactual output;
compute a second PN value and a second PS value for the second LLM based on the second factual output and the second counterfactual output;
compare computational reasoning performance of the first LLM relative to the second LLM based on one or more of (1) the first and second PN values and (2) the first and second PS values;
select one of the first LLM and the second LLM based on the comparison; and
resolve a target prompt using the selected one of the first LLM and the second LLM.

13. The computer storage medium of claim 12, wherein the instructions further cause the processor (1414) to:

identify a baseline PN value and baseline PS value for the factual prompt and the counterfactual prompt,
wherein comparing the computational reasoning performance of the first LLM relative to the second LLM further includes comparing one or more of (1) the first and second PN values to the baseline PN value and (2) the first and second PS values to the baseline PS value.

14. The computer storage medium of claims 12 or 13, wherein the instructions further cause the processor (1414) to:

compute a first factual inconsistency rate (FIR) based on the first factual output and a first counterfactual inconsistency rate (CIR) based on the first counterfactual output for the first LLM;
compute a second factual inconsistency rate (FIR) based on the second factual output and a second counterfactual inconsistency rate (CIR) based on the second counterfactual output for the second LLM; and
generate a graph plotting the first and second FIRs against the first and second CIRs for the first and second LLMs.

15. The computer storage medium of any of claims 12 to 14, wherein the instructions further cause the processor (1414) to generate a heatmap graph that represents an error rate of the first and second LLMs for at least one element of a problem associated with the factual prompt and the counterfactual prompt.

110

**Direct prompt**

Does six divide {number}? Use the factor method to answer this question. Be as concise as possible.

**Counterfactual prompt**

Imagine that (number} has three as a prime factor while retaining all its other prime factors. With this assumption does six divide {number}? Use the factor method to answer this question. Be as concise as possible.

112

120

**Div. by 6 - questions**

FIG. 1

FIG. 2

EP 4 708 150 A1

**Divisibility rule:** A natural number N that is divisible by both 2 ($C_2$) and 3 ($C_3$) is also divisible by 6 ($C_6$).

310

312

**Reasoning graph** $\mathcal{G}$:

N

$C_2$

$C_3 \longrightarrow C_6$

**FIG. 3A**

320

**Factual (F) and counterfactual (CF) datasets from** $\mathcal{G}$

N

$C_2$

$C_3 \longrightarrow C_6$

N

$C_2$

$do(C_3 = True) \longrightarrow C_6$

$\mathcal{D}_F$ ★ True PN, PS $\mathcal{D}_{CF}$

⊙ LLM-based PN, PS densities

$\mathcal{D}_F^{LLM}$    $\mathcal{D}_{CF}^{LLM}$

| Factual prompt | → | LLM |
| Boolean input (C3) | ↻ | Boolean output (C6) |

| Counterfactual prompt | → | LLM |
| Boolean input (C3) | ↻ | Boolean output (C6) |

**Factual (F) and counterfactual datasets from an LLM**

322

**FIG. 3B**

330

**Assessment**

PN

**LLM 1: NOT reasoning**

PS

PN

**LLM 2: Reasoning**

PS

**FIG. 3C**

EP 4 708 150 A1

340

344

$$\hat{\sigma}_0 \xrightarrow{\quad Q^{LLM} \quad} \hat{\sigma}_1$$

$\alpha$ | [*prompt*]              [*output*] | $\Upsilon$

$$\sigma_0 = \{X \mapsto 16, C_6 \mapsto \perp \} \quad\cdots\xrightarrow{\quad Q \quad}\cdots\quad \sigma_1 = \{X \mapsto 16, C_6 \mapsto \textit{False}\}$$

342

# FIG. 3D

414 — **CandyParty**

412 — **EvenSum**

410

| $\mathcal{D}_F$ | $C_6 = 0$ | $C_6 = 1$ |
|---|---|---|
| $C_3 = 0$ | 267 | 0 |
| $C_3 = 1$ | 67 | 66 |

| $\mathcal{D}_{CF}$ | $C_6 = 0$ | $C_6 = 1$ |
|---|---|---|
| $C_3 = 0$ | 133 | 0 |
| $C_3 = 1$ | 133 | 134 |

| $\mathcal{D}_F^{GPT\text{-}4}$ | $C_6 = 0$ | $C_6 = 1$ |
|---|---|---|
| $C_3 = 0$ | 267 | 0 |
| $C_3 = 1$ | 67 | 66 |

| $\mathcal{D}_{CF}^{GPT\text{-}4}$ | $C_6 = 0$ | $C_6 = 1$ |
|---|---|---|
| $C_3 = 0$ | 132 | 1 |
| $C_3 = 1$ | 132 | 135 |

**FIG. 4**

FIG. 5

FIG. 6

FIG. 7A

720

**$\Upsilon$-PN-overlap**

722

**$\Upsilon$-PS-overlap**

724

**SumEven**

FIG. 7B

FIG. 7C

EP 4 708 150 A1

900

**ConPref**

FIG. 9

800

**ConPref**

FIG. 8

FIG. 10

$1100 \longrightarrow$

$$\hat{\sigma}_0 \xrightarrow{\quad Q_{C_6} \quad} \hat{\sigma}_1$$

$$\hat{\sigma}_1 \xrightarrow{\quad \Upsilon \quad}$$

$$\sigma'_0 \xrightarrow{\quad \alpha_C \quad} \hat{\sigma}_0$$

$$\sigma_1 = \{ N \mapsto 10, \\ C_3 \mapsto T, \\ C_6 \mapsto T, \\ C_2 \mapsto T \}$$

$$Q_{C_6}$$

$$\sigma'_0 = \{ N \mapsto 10, \\ C_3 \mapsto T, \\ C_6 \mapsto F, \\ C_2 \mapsto T \}$$

$$\sigma_0 \xrightarrow{\quad Q_{C_3} = \textbf{\textit{True}} \quad} \sigma'_0$$

$$\sigma_0 = \{ N \mapsto 10, \\ C_3 \mapsto F, \\ C_6 \mapsto F, \\ C_2 \mapsto T \}$$

FIG. 11

FIG. 12A

FIG. 12B

FIG. 12C

1300

1310

SUBMIT FACTUAL PROMPT AND
COUNTERFACTUAL PROMPT TO MODELS

1312

COMPUTE PN AND PS VALUES

1314

EVALUATE THE REASONING CAPABILITIES
OF THE MODELS BASED ON THE PN AND
PS VALUES

1316

SELECT A MODEL BASED ON THE
COMPARISON

1319

RESOLVE A TARGET PROMPT USING THE
SELECTED MODEL

# FIG. 13

# FIG. 14

1400

MEMORY    1412

| DATA    1412a |
| INSTRUCTIONS 1412b |

PROCESSOR(S)    1414

PRESENTATION COMPONENT(S)    1416

NETWORK COMPONENT    1424

I/O PORT(S)    1418

I/O COMPONENTS    1420

POWER SUPPLY    1422

1410

1426a

1426

NETWORK    1430

1428

Europäisches
Patentamt

European
Patent Office

Office européen
des brevets

## EUROPEAN SEARCH REPORT

Application Number

EP 25 19 5380

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN, S ET AL.: "Causal Evaluation of Language Models", ARXIV.ORG:2405.00622, 1 May 2024 (2024-05-01), XP091744750, * abstract * * pages 46-48 * * pages 57, 83 * * pages 225-228 * | 1-15 | INV. G06N3/0985 G06N3/045 G06N3/0475 |
| X,P | GONZÁLEZ, J ET AL.: "Does Reasoning Emerge? Examining the Probabilities of Causation in Large Language Models", ARXIV.ORG:2408.08210, 15 August 2024 (2024-08-15), XP091852420, * the whole document * | 5 | |
| A | TAN, J ET AL.: "Learning and Evaluating Graph Neural Network Explanations based on Counterfactual and Factual Reasoning", PROCEEDINGS OF THE 2023 ACM DESIGNING INTERACTIVE SYSTEMS CONFERENCE, 25 April 2022 (2022-04-25), pages 1018-1027, XP059327201, DOI: 10.1145/3485447.3511948 ISBN: 978-1-4503-9926-5 * Sections 4.2, 6 and 7 * | 1-15 | |
| A | LIU, X ET AL.: "CASA: Causality-driven Argument Sufficiency Assessment", ARXIV.ORG:2401.05249V2, 2 April 2024 (2024-04-02), XP091715986, * Sections 1 to 3 * | 1-15 | |
| A | ZHANG, J ET AL.: "When LLMs Meet Cybersecurity: A Systematic Literature Review", ARXIV.ORG:2405.03644, 6 May 2024 (2024-05-06), XP091748796, * Section 2 * | 5 | |

**TECHNICAL FIELDS SEARCHED (IPC)**

G06N

The present search report has been drawn up for all claims

| Place of search | Date of completion of the search | Examiner |
|---|---|---|
| The Hague | 20 January 2026 | Millet, Guillaume |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)